# EUROPEAN PATENT APPLICATION

(11) **EP 0 943 696 A1**
(43) Date of publication of application: **22.09.1999**
(21) Application number: 98941704.3
(22) Date of filing: 03.09.1998
(51) Int. Cl.: C22C 38/00, C22C 38/06, C22C 38/12, C21D 8/02, C21D 9/46, B65D 1/12

(54) **STEEL PLATES FOR DRUM CANS, METHOD OF MANUFACTURING THE SAME, AND DRUM CAN**

(30) Priority: 04.09.1997 JP 23993797; 04.09.1997 JP 23993897; 21.04.1998 JP 11072298
(71) Applicant: Kawasaki Steel Corporation, Kobe-shi, Hyogo 651-0075 (JP); Kawasaki Steel Container, Co., Ltd., Osaka-shi, Osaka-fu (JP)
(72) Inventor: TOSAKA, Akio, Technical Research Laboratories,, Chuo-ku, Chiba-shi, Chiba-ken 260-0835 (JP); ARATANI, Masatoshi Technical Research Laboratories, Chuo-ku, Chiba-shi Chiba-ken 260-0835 (JP); NISHIMURA, Keiji, Kawasaki Steel Corporation, Chiba-ken 260-0835 (JP); OGINO, Atsushi Chiba Works of Kawasaki Steel Corp., Chiba-ken 260-0835 (JP); ARATANI, Makoto Chiba Works of Kawasaki Steel Co., Chiba-ken 260-0835 (JP); SHIMIZU, Tetsuo, Technical Research Laboratories,, Chuo-ku, Chiba-shi, Chiba-ken 260-0835 (JP); KATO, Yasunori Kawasaki Steel Container, Co., Ltd., Hyogo-ken 664-0001 (JP); AKEDA, Yasuhiro Kawasaki Steel Container, Co., Ltd, Hyogo-ken 664-0001 (JP); YAMASHITA, Itaru Kawasaki Steel Container Co. Ltd., Hyogo-ken 664-0001 (JP)
(74) Representative: Henkel, Feiler, Hänzel
(86) International application number: JP9803956
(87) International publication number: WO9911835

(57) **Abstract**

Newly developed were steel sheets for drums, which specifically have an N content falling between 0.0050 and 0.0200 % by weight with increased solute N therein, and have an Nb content falling between 0.003 and 0.10 % by weight, and in which the grains are fine and have a small mean grain size. The steel sheets for drums are characterized by having higher mechanical strength at room temperature and even at high temperatures than conventional drum sheets, and having better low-temperature toughness than the latter. As a result, newly provided were thinner and more lightweight drums than conventional ones, and the frequency of recycling the drums is higher than that of recycling conventional drums. Also proposed herein are methods for surely producing the steel sheets.

## Description

### TECHNICAL FIELD

The present invention relates to a steel sheet for drums, to a method for producing it, and to a drum. More precisely, it relates to a technique for producing steel sheets that are thinner and more lightweight and have higher high-temperature strength and low-temperature toughness than conventional ones, and also to a technique for forming the sheets into drums that are recyclable many times repeatedly.

### BACKGROUND OF THE INVENTION

Drums referred to herein are grouped into open drums as stipulated in the Japanese Industrial Standard (hereinafter, JIS) Z 1600 and closed drums as stipulated in JIS Z 1601. These drums are made of steel sheets, and each composed of a disc-like top board to be a lid, a disc-like base board to be a bottom, and a body board to be formed into a cylindrical body through bending and seam-welding. To form the open drum, a base board only is bonded to one end of the cylindrical body through "seaming", while a top board is detachably attached to the other end thereof. The closed drum is a closed container, for which a top board and a base board are bonded to the both ends of the cylindrical body through seaming. The "seaming" as referred to herein is a technique of joining two steel sheets, for which one end of one sheet is put on one end of another sheet, and the thus-overlapping ends are seamed in one and the same direction to be bonded together. Depending on the number of the seaming operations, known are different types of "double-seaming", "triple-seaming", etc.

The drums are chemically processed or coated on their outer surfaces and optionally even on their inner surfaces. As being containers for transportation and storage of substances to be therein, the drums are required to meet good dimension accuracy and sound welding and bonding (seaming). In addition, they are further required to have high strength. This is because, if the drums are deformed due to outer force imparted thereto while they are transported or so, not only the deformed drums are difficult to stack up in order but also they will lose good appearance. For these reasons, an airtightness test (hydraulic test), a drop test, a stacking test and others for the drums are stipulated in JIS.

As the materials for the top board, the base board and the body plate for the drums, in general, hot-rolled mild steel sheets (steel strips) as stipulated in JIS G 3131, or cold-rolled steel sheets (steel strips) as stipulated in JIS G 3141 have heretofore been used. Concretely, they are cold-rolled sheets of low-carbon aluminium killed steel as processed in a "box annealing line" or in a "continuous annealing line". One typical composition of the steel comprises C of from 0.05 to 0.10 % by weight, Mn of from 0.2 to 0.5 % by weight, Si of smaller than 0.05 % by weight, Al of from 0.02 to 0.06 % by weight, and N of from 0.0015 to 0.0030 % by weight. The steel sheets are characterized by having an yield stress (YS) of around 225 MPa, a tensile strength (TS) of around 340 MPa and a degree of elongation (EL) of around 42 %. Their thickness falls between 0.5 and 1.6 mm. For example, for 200-liter closed drums (grade 1, class H) that are much used anywhere, the steel sheets have a thickness of 1.6 mm. Hot-rolled steel sheets may be used for some thick drums, but the frequency of using hot-rolled steel sheets for drums is lower than that of using cold-rolled steel sheets for them.

With the recent demand for reducing the production costs for drums, the thickness of the steel sheets for drums is being reduced. To meet this object, the strength of drums made of thin steel sheets must be comparable to that of ordinary drums. For this, the strength of steel sheets themselves for drums must be increased over that of ordinary steel sheets. However, for increasing the strength of steel sheets, various problems, especially those mentioned below must be solved, apart from the requirements for ordinary steel characteristics of good weldability, formability, etc.

### (1) Improvement in "seamability" of steel sheets:

In general, steel sheets with increased strength are often difficult to work (this is hereinafter referred to as poor workability). The same shall apply to seaming of high-strength steel sheets, and high-strength steel sheets are often incompletely seamed. Incompletely seamed drums often leak the contents. In other words, they do not pass the drop test as stipulated in JIS. Recently, therefore, "triple seaming" has been being replaced for the previous "double seaming" in some cases, for the purpose of ensuring good "seaming" of steel sheets into drums. However, increasing the number of the seaming steps is unfavorable in that not only the seaming process is complicated but also the amount of the steel sheets necessary for forming drums increases. At present, therefore, it is desired to improve the characteristics of steel sheets themselves for ensuring sound seaming in drums as previously, without increasing the number of the seaming steps in producing drums.

### (2) Improvement in "strength at high temperatures (hereinafter, high-temperature strength)" of steel sheets:

In general, drums are not scrapped after having been used only once, but shall be used repeatedly many times in the same or different uses. Specifically, drums having been once filled with contents are, after their use, washed to clean their inside, and are repeatedly used 4 or 5 times on average. In recycling used drums, the deposits on their inside and the coating on their outer surface must be completely removed. To remove them, in general, used drums are shot-blasted. While being shot-blasted, drums are often deformed as a large number of steel balls and the like collide against the steel walls of the drums at a high speed. Too much deformed drums could not be stacked up, and could not be recycled. Therefore, the degree of deforming of drums is one factor that determines as to whether or not the drums are recyclable and how many times they are recyclable (hereinafter, recyclability). As a result of the present inventors' experiments, it has been found that the deformation of drums owing to shot-blasting could not be prevented even when the strength at room temperature (hereinafter, room-temperature strength) of the steel sheets for drums is increased. This is because, prior to shot-blasting, the contents of drums are removed through incineration, for which drums are heated at about 800°C (hereinafter, incineration). In that case, drums are often shot-blasted before being completely cooled. For these reasons, in addition to the reduced deformability of drums in shot-blasting at room temperature, the reduced deformability thereof under heat at high temperatures and even that in shot-blasting during the subsequent cooling step are important factors for the recyclability of drums. Specifically, the steel sheets for drums must have high strength even the drums are within a temperature range falling between 300 and 600°C or so.

### (3) Security for low-temperature toughness:

Heretofore, drums have not been produced on condition that their low-temperature characteristics are on a satisfactory level. Recently, however, drums have been being much used in plants that require a low temperature of -40°C or in coldest districts. Therefore, drums are now required not to leak the contents in the drop test at low temperatures. For this, steel sheets for drums must have good low-temperature toughness, especially even after having been seamed. In general, high toughness of steel sheets is contradictory to high strength thereof.

At present, the problems of the above-mentioned (1) to (3) are not still solved even by steel sheets for drums that have been improved to have high strength according to known means. For example, for increasing the strength of steel sheets, known are various means of solute enhancement to be attained by addition of an increased amount of alloy elements to steel, working enhancement (see JP-A-56-77039), precipitation hardening, etc. However, all these means are effective in increasing the room-temperature strength of steel sheets in some degree, but rather lower the low-temperature toughness and the ductility thereof and even worsen the "seamability" thereof. In addition, it is difficult to ensure satisfactory high-temperature strength of steel sheets according to those means.

Also known is a reinforcing method for steel sheets, which comprises heat-treating a steel sheet to thereby change the metallographic structure of the sheet and by which the crystal grains constituting the sheet are made fine or precipitate products (bainite, etc.) having been transformed at relatively low temperatures are formed in the sheet. However, even the steel sheets and the drums having been processed according to the reinforcing method are often deteriorated and their strength or toughness is lowered while the steel sheets are welded together or while the contents of the drums are incinerated.

As mentioned hereinabove, steel sheets that satisfy all the necessary requirements for drums have not been developed as yet. At present, therefore, satisfactorily thin drums could not be produced. Given that situation, the object of the present invention is to provide steel sheets for drums that are thinner and more lightweight and have higher high-temperature strength and low-temperature toughness than conventional ones, and a method for producing them, and also to provide drums of such steel sheets that are recyclable many times repeatedly. The steel sheets for drums are required to have a tensile strength (TS) at room temperature (25°C) of at least 370 MPa, preferably at least 410 MPa, and a degree of elongation of at least 35 %.

### DISCLOSURE OF THE INVENTION

In order to attain the object noted above, we, the present inventors have assiduously studied the composition of steel sheets for drums, and the characteristics thereof and the production method for them. As a result, we have noted two different means for solving the outstanding problems, and have confirmed that the both two are effective for attaining the object. Based on these, we have completed the present invention.

One technical idea (hereinafter, the first technical idea) of the inventors is based on the following finding: When a steel sheet which exhibits a relatively low strength while it is formed into drums and of which the strength is expected to significantly increase in the subsequent coating or baking step is used as the material for forming drums, then it satisfies the two requirements of excellent drum formability and increased strength of drums to be formed. The means for embodying this technical idea comprises positively forming solute N in steel, without being based on the conventional steel reinforcement with solute C. Specifically, for this, the amount of specific elements such as C, Si, Mn, Al and others to be in steel is limited, while the amount of solute N (nitrogen) therein is increased, and, in addition, the conditions for heat treatment and rolling of steel are controlled suitably. Another technical idea (hereinafter, the second technical idea) is as follows: A minor amount of Nb is incorporated into low-carbon aluminium killed steel, and the heat-treatment condition and the rolling condition for this are optimized, whereby the metallographic grains constituting the steel are made fine.

Specifically, the invention based on the first technical idea is a steel sheet to be used as the material for drums, which is characterized by containing:
C of from 0.01 to 0.10 % by weight,
Si of from 0.01 to 0.20 % by weight,
Mn of from 0.05 to 1.0 % by weight,
P of at most 0.04 % by weight,
S of at most 0.03 % by weight,
Al of from 0.001 to 0.150 % by weight, and
N of from 0.0050 to 0.0200 % by weight,
with the balance of Fe and inevitable impurities.

The invention is also a steel sheet for drums, in which at least 0.0010 % by weight of N is in the form of solute N, and which has a degree of elongation of at least 35 %.

The invention is also a steel sheet for drums, which is a cold-rolled steel sheet or a mill scale-coated, hot-rolled steel sheet.

Relating to the production of those steel sheets, the invention provides a method for producing steel sheets for drums, which comprises hot-rolling a steel slab of a composition that contains:
C of from 0.01 to 0.10 % by weight,
Si of from 0.01 to 0.20 % by weight,
Mn of from 0.05 to 1.0 % by weight,
P of at most 0.04 % by weight,
S of at most 0.03 % by weight,
Al of from 0.001 to 0.150 % by weight, and
N of from 0.0050 to 0.0200 % by weight,
with the balance of Fe and inevitable impurities, at a finishing delivery temperature of not lower than 800°C, then cooling it in an accelerated cooling manner within 2 seconds after the finish of the hot-rolling, and thereafter coiling it at a coiling temperature of not higher than 680°C.

The method for producing steel sheets for drums of the invention noted above may further comprise washing the resulting steel sheet with acid, cold-rolling it after the acid washing, annealing it at a temperature not lower than the recrystallization temperature of the sheet, and temper-rolling it.

The invention based on the second technical idea is a steel sheet to be used as the material for drums, which is characterized by containing:
C of from 0.01 to 0.10 % by weight,
Si of from 0.01 to 0.20 % by weight,
Mn of from 0.05 to 1.0 % by weight,
P of at most 0.04 % by weight,
S of at most 0.01 % by weight,
Al of from 0.001 to 0.150 % by weight,
N of at most 0.0050 % by weight, and
Nb of from 0.003 to 0.10 % by weight,
with the balance of Fe and inevitable impurities.

The invention is also a steel sheet for drums, which additionally contains Ti of from 0.005 to 0.10 % by weight, or in which the grains in the ferrite phase appearing in the metallographic structure have a mean grain size of not larger than 10 µm.

The invention is also a steel sheet for drums, which is a mill scale-coated, hot-rolled steel sheet. In this, the mill scale may contain magnetite in an amount of at least 80 % by volume, or it may have a thickness of not larger than 5 µm.

In addition, the invention is also a steel sheet for drums, which is a cold-rolled steel sheet.

Relating to the production of those steel sheets based on the second technical idea, the invention provides a method for producing steel sheets for drums, which comprises hot-rolling a steel slab of a composition that contains:
C of from 0.01 to 0.10 % by weight,
Si of from 0.01 to 0.20 % by weight,
Mn of from 0.05 to 1.0 % by weight,
P of at most 0.04 % by weight,
S of at most 0.01 % by weight,
Al of from 0.001 to 0.150 % by weight,
N of at most 0.0050 % by weight, and
Nb of from 0.003 to 0.10 % by weight,
with the balance of Fe and inevitable impurities, at a finishing delivery temperature of not lower than 750°C, then cooling it in an accelerated cooling manner within 2 seconds after the finish of the hot-rolling, and thereafter coiling it at a coiling temperature of not higher than 700°C.

The method for producing steel sheets for drums of the invention noted above may further comprise washing the resulting steel sheet with acid, cold-rolling it after the acid washing, annealing it at a temperature not lower than the recrystallization temperature of the sheet, and temper-rolling it.

The drum of the invention is composed of a cylindrical body plate, and a top board to be a lid and a base board to be a bottom that are fitted to the ends of the body plate and are in the form of a disc, and this drum is characterized in that one or more of the body plate, the top board and the base board are made of any of the steel sheets for drums mentioned above.

### BEST MODES FOR CARRYING OUT THE INVENTION

First described is the chemical composition of the steel sheet for drums of the invention. For this, the elements common to both the steel sheet based on the first technical idea and that based on the second technical idea are described in the former part, while those not common to them are in the latter part.

### C: from 0.01 to 0.10 % by weight

C is in the matrix iron as solute C, and enhances the strength of steel sheets. However, if its amount is larger than 0.10 % by weight, too much C will form a large amount of carbide precipitates and will lower the ductility of steel sheets. In addition, when steel sheets containing too much C are welded, the welded part will be too much hardened. When the welded part thus having been too much hardened is in the flanges of drums, the flanges are much cracked. For these reasons, in the invention, the uppermost limit of the C content is defined to be 0.10 % by weight in view of the formability of the steel sheet. For better formability of the steel sheet, the C content is preferably at most 0.08 % by weight. If, on the other hand, the C content is lower than 0.01 % by weight, the strength (at room temperature and at high temperatures) of the steel sheet is greatly lowered, and the steel sheet could not ensure the intended strength. If so, in addition, the strength of the welded part of the sheets is also lowered. For these reasons, the lowermost limit of the C content in the invention is 0.01 % by weight.

### Si: from 0.010 to 0.20 % by weight

Si is useful as an element for reinforcing steel sheets. In order to effectively exhibit its effect, Si must be in steel sheets in an amount of at least 0.01 % by weight. However, if too much Si is therein, hot-rolling and cold-rolling of the steel sheets will be difficult. In addition, the surface processability (especially, the chemical processability) and also the corrosion resistance of the steel sheets will be poor. If much more Si is therein, the welded part of the steel sheets is too much hardened, and is undesirable. For these reasons, the uppermost limit of the Si content in the invention is 0.20 % by weight. Especially for drums to be used for corrosion resistance, the Si content is preferably at most 0.10 % by weight.

### Mn: from 0.05 to 1.0 % by weight

Mn is an element for preventing thermal cracking of steel sheets to be caused by S, and its content shall vary depending on the S content of steel sheets. In addition, Mn has the metallographic effect to make the grains in steel sheets fine. Therefore, it is desirable that the Mn content is at least 0.05 % by weight. However, too much Mn will worsen the corrosion resistance of steel sheets and will harden steel sheets too much, and cold-rolling of such too much-hardened steel sheets is difficult. If much more Mn is in steel sheets, the weldability of the steel sheets will be poor and, in addition, the formability of the welded parts will also be poor. For these reasons, in the invention, the Mn content is limited to be at most 1.0 % by weight. For steel sheets having better corrosion resistance and better formability, it is desirable that the Mn content is at most 0.60 % by weight.

### Al: from 0.001 to 0.150 % by weight

Al is added to steel melt for deoxidation during steelmaking, and this is an element useful for increasing the degree of cleanliness of steel. In addition, it has the metallographic action to make the grains in steel fine. To the steel sheets for drums of the invention, Al is positively added in an amount of at least 0.001 % by weight. If, however, the Al content is larger than 0.150 % by weight, the surface properties of the steel sheets are worsened (for example, surface defects to be caused by alumina clusters increase). Therefore, in the invention, the uppermost limit of the Al content is up to 0.150 % by weight. For more stabilizing the properties of the steel sheets (for example, for preventing the fluctuation of yield stress to be caused by the variation in the production factors), the Al content is more preferably from 0.010 to 0.08 % by weight.

### P: at most 0.04 % by weight

Too much P will greatly harden steel. Forming too hard steel into flanges of drums is difficult. In addition, too much P will greatly lower the corrosion resistance of steel sheets. Further, since P greatly segregates in steel, the welded parts of steel containing too much P are often brittle. For these reasons, in the invention, the P content is limited to at most 0.04 % by weight. Preferably, the P content is at most 0.02 % by weight.

### S: at most 0.03 % by weight

S exists in steel in the form of compositions of long extended non-metallic inclusions, and it lowers the workability (including ductility, bendability, bend-rebend formability, etc.) of steel sheets, and also lowers the corrosion resistance thereof. Therefore, the S content is as small as possible. However, as a result of the inventors' experiment, it has been found that the S content of up to 0.03 % by weight is allowable. For steel sheets having better workability, it is desirable that the S content is at most 0.007 % by weight.

The N content of the steel sheets of the invention shall vary depending on the first technical idea (for reinforcement of steel owing to increased solute N) and the second technical idea (for forming finer grains in steel by Nb addition). Specifically, the N content of the former steel sheet is an important factor of the invention, while that of the latter one is not so much important. Therefore, the N content is differentiated between the two, and is separately mentioned below.

### N in the steel sheet based on the first technical idea: from 0.0050 to 0.0200 % by weight

N may be in steel in the form of solute N, and its effect is to increase the strength of steel sheets. In the invention based on the first technical idea, at least a predetermined amount of solute N is ensured in steel, whereby the strength of the steel is increased owing to the phenomenon of so-called "solid solution hardening". For this, the N content of the steel sheet must be at least 0.0050 % by weight or more. However, too much N over 0.0200 % by weight will produce many defects (blow holes, etc.) inside the steel sheet. In addition, when steel melt containing too much N is cast, the cast steel slabs are often cracked. For these reasons, in the invention based on the first technical idea, the N content is defined to fall between 0.0050 and 0.0200 % by weight. In order to stabilize the property of the steel sheet (for example, to prevent the steel sheets as produced under different conditions from having different properties) and to increase the production yield of the steel sheet, the N content is more desirably from 0.0070 to 0.0170 % by weight.

The N content falling within the defined range does not interfere at all with the necessary weldability of the steel sheet and even the workability of the welded parts in forming the steel sheet into drums, but is rather effective for increasing the strength of the steel sheet. In one example where a steel sheet sample having the N content noted above was formed into cylindrical bodies for drums through seam-welding, no significant increase in the degree of hardness of the welded part was found. The solute N as referred to herein is meant to indicate N that exists in steel in the form of its solid solution but not in the form of nitrides or other inclusions. The solute N content of steel may be obtained by subtracting the value as obtained through "precipitate N analysis" in bromide ester dissolution of a steel sample, from the total N content of the steel sample.

### N in the steel sheet based on the second technical idea: at most 0.0050 % by weight

To the steel sheet, solid solution reinforcement with N is not directed. Therefore, it is unnecessary to specifically increase the N content of the steel sheet. Too much N in the steel sheet will rather interfere with the property-improving effect of Nb therein. In addition, when steel melt containing too much N is cast, the cast steel slabs are often cracked. For these reasons, the N content is desirably as small as possible. However, as a result of the inventors' experiment, it has been found that the N content of up to 0.0050 % by weight is allowable. Therefore, the uppermost limit of the N content is herein 0.0050 % by weight. For drums having higher strength and for steel sheets having higher low-temperature toughness, the N content is preferably at most 0.0040 % by weight.

In the steel sheet based on the second technical idea additionally contains Nb and Ti in place of the solute N noted above. The reasons for defining the amounts of those additional elements are mentioned below.

### Nb: from 0.003 to 0.10 % by weight

Even when existing only in a minor amount, Nb exhibits its metallographic effect to make the grains in steel fine (concretely, to make the grains in the ferrite phase in steel fine). Thus, Nb in the steel sheet of the invention significantly increases the strength of the steel, and improve the low-temperature toughness of the "seamed" part of the steel sheet. In addition, it is further effective in preventing the grains in so-called "seam-welded parts" of drum bodies from growing to be coarse grains. In forming drums, a top board and a base board are bonded to the ends of a seam-welded body through seaming, and flanges are previously formed around the parts of the body to be seamed with those boards. In this drum-forming process, the fine grains as formed in the steel sheet in the presence of Nb act effectively for preventing the sheet from being cracked while the flanges are formed around the body of the sheet. In addition, the presence of such a minor amount of Nb in steel increases the strength of the steel sheet within a temperature range falling between 300 and 600°C, and increases the high-temperature creep strength and even the high-temperature pressure resistance of the drums made of the steel sheet. Moreover, in the process of producing the steel sheet comprising coiling up the rolled steel strip, the Nb carbides formed further enhance the strength of the coiled sheet through so-called "precipitation hardening". Therefore, Nb in steel is effective for increasing the strength of the steel sheet, especially for elevating the yield stress thereof. Nb in steel exhibits its effect as above, when its amount is at least 0.003 % by weight. Therefore, in the invention, the lowermost limit of Nb in the steel sheet is defined to be 0.003 % by weight. On the other hand, however, if the Nb content is larger than 0.10 % by weight, thermal deformation resistance of the steel sheet increases, whereby hot-rolling of the sheet will be somewhat difficult. For these reasons, in the invention, the uppermost limit of the Nb content is defined to be up to 0.10 % by weight. For further facilitating the production of the steel sheet and for preventing the increase in the deformation resistance of the steel sheet, the Nb content is more preferably from 0.003 to 0.030 % by weight.

### Ti: from 0.005 to 0.10 % by weight

Ti is effective for preventing steel slabs to be rolled from being cracked. The steel sheet based on the second technical idea may optionally contain Ti. Ti exhibits its effect when it is in the steel sheet in an amount of at least 0.005 % by weight. On the other hand, however, if the Ti content is larger than 0.10 % by weight, the formability of the seam-welded part of the steel sheet into drums will be somewhat poor. In particular, too much Ti in the steel sheet will interfere with sound "seaming" of the sheet into drums. For these reasons, in the invention, the Ti content is defined to fall between 0.005 and 0.10 % by weight.

The other elements in the steel sheets based on the first and second technical ideas are Fe and inevitable impurities. For the elements corresponding to the inevitable impurities, it is desirable that Cu is limited to at most 0.2 % by weight, Ni to at most 0.2 % by weight, Cr to at most 0.2 % by weight and Mo to at most 0.2 % by weight. This is because these elements may increase the strength of the steel sheets, but often greatly lower the weldability of the steel sheets, and the workability and the chemical processability of the welded parts of the sheets.

The steel sheets for drums of the invention may be any of so-called "hot-rolled sheets" which are produced by hot-rolling steel slabs, or so-called "cold-rolled sheets" which are produced by further cold-rolling the hot-rolled sheets, provided that they satisfy the chemical composition noted above. Therefore, in consideration of the different technical ideas to be the basis of the invention, the invention basically encompasses four different types of steel sheets. Where the steel sheets are further differentiated in accordance with the different treatments (for example, acid-washing, temper-rolling, etc.), to be applied to them while they are produced, they are grouped into six different types in total. Now, methods for producing the steel sheets for drums of the invention are mentioned below.

There are two basic flowcharts for producing them. One comprises a step of preparing steel slabs → a step of reheating the steel slabs → a step of hot-rolling the steel slabs → a step of cooling the hot-rolled sheets in an accelerated cooling manner → a step of coiling the sheets; and the other comprises a step of preparing steel slabs → a step of reheating the steel slabs → a step of hot-rolling the steel slabs → a step of cooling the hot-rolled sheets in an accelerated cooling manner → a step of coiling the cooled sheets → a step of cold-rolling the hot-rolled sheets → a step of annealing the cold-rolled sheets. If desired, an acid-washing step or a temper-rolling step may be added to the lines.

The details of these steps and the conditions for them are described below. In addition, the differences in their production between the steel sheet based on the first technical idea and that based on the second technical idea will also be mentioned below, if necessary.

### Step of preparing steel slabs:

A steel melt having the chemical composition noted above is prepared in a converter, an electric furnace or the like, and this is solidified through continuous casting, ingot making, thin slab casting or the like into steel slabs. For casting it, preferred is continuous casting so as to prevent macro-segregation of C, Mn and the like in the cast slabs.

### Step of reheating steel slabs:

The steel slab prepared previously is reheated in a reheating furnace to be ready for hot-rolling. Though not specifically defined in the invention, the temperature at which the steel slab is reheated in the step may fall between 1000 and 1300°C. At temperatures higher than 1300°C, the grains in the steel slab being reheated will grow to be coarse grains, and the coarse grains thus formed will worsen the elongation characteristic of the hot-rolled sheet to be prepared by hot-rolling the slab. At temperatures lower than 1000°C, on the other hand, the deformation resistance of the slab reheated will be too high while the slab is hot-rolled. If so, the rolling load increases, and the rolling is difficult.

In this step, the steel slab is once cooled to room temperature and is thereafter reheated, as so mentioned above. Different from that, in the invention, the hot steel slab may be directly put into a reheating furnace, without being cooled to room temperature; or, after having been soaked for a while, it may be directly hot-rolled (this is referred to as direct rolling).

### Step of hot-rolling steel slab:

The reheated steel slab is hot-rolled in a known manner. In the invention, however, the slab temperature at which the slab is finish-rolled (this is referred to as finishing delivery temperature) is defined as follows:

In producing the steel sheet (having N solute existing therein) according to the first technical idea, the finishing delivery temperature is to be 800°C or higher. This is because, at that temperature, obtained are hot-rolled sheets having a fine and uniform metallographic structure (of essentially a ferrite phase). In addition, as the solute N is ensured in the hot-rolled steel sheet, the mechanical characteristics of the sheet are stabilized. On the other hand, in producing the steel sheet (containing Nb therein) according to the second technical idea, the finishing delivery temperature is to be 750° C or higher. This is because, at that temperature, obtained are hot-rolled sheets having a fine and uniform metallographic structure (of essentially a ferrite phase). In addition, as Nb is prevented from unevenly precipitating in the hot-rolled steel sheet, the mechanical characteristics of the sheet are stabilized.

However, if the finishing delivery temperature is higher than 1000°C in both cases, much scale (iron oxide) is formed on the surface of every steel sheet formed, and the sheets shall have many defects caused by the scale. As a result, the surface soundness of the sheets is lowered. If so, the sheets are not favorable to drums. For these reasons, it is desirable that the uppermost limit of the finishing delivery temperature is 1000°C. For obtaining steel sheets of uniform quality (especially in the transverse direction of the sheets), the finishing delivery temperature preferably falls between 800 and 920°C.

### Accelerated cooling step:

After having been hot-rolled in the manner mentioned above, the resulting hot-rolled steel sheets (in practice, steel strips) are immediately cooled in an accelerated cooling manner. The accelerated cooling makes the sheets have a fine metallographic structure. In addition, it prevents the precipitation of AlN in the hot-rolled steel sheets, though the AlN precipitation will be promoted by rolling strain. After having been thus cooled in an accelerated cooling manner, the base structure of the hot-rolled steel sheets ensures the presence of an effective amount of solute N therein.

For the accelerated cooling, preferably used is water or water mist as the cooling medium, and the cooling speed is preferably 50°C/sec or higher. Regarding the start of the cooling, it is desirable that the cooling is started within 2 seconds after the finish of the hot-rolling in order to make the grains in the sheets fine and to increase the room-temperature strength and the high-temperature strength of the sheets. For the purpose of further increasing the strength of the sheets and of controlling the thickness of the scale that may be formed on the sheets, the accelerated cooling is more desirably started within 1.5 seconds after the finish of the hot-rolling. In addition, in order to reduce the thickness of so-called "mill scale" that may be formed on the hot-rolled sheets to at most 5 µm or lower, it is even more desirable that the accelerated cooling is started within 0.5 seconds after the finish of the hot-rolling. The component of the mill scale is iron oxide, which will be mentioned hereinunder.

### Step of coiling steel strip:

In producing the steel sheet (having N solute existing therein) according to the first technical idea, the cooled steel strip is coiled at a temperature not higher than 680°C. This is because, in the coiling step, the hot-rolled steel sheet well keeps the desired amount of solute N therein, and, even after cold-rolled, the sheet still keeps the solute N content of not smaller than 0.0010 % by weight. On the other hand, in producing the steel sheet (containing Nb therein) according to the second technical idea, the coiling temperature is to be 700°C or lower. This is because, if the coiling temperature is higher than 700°C, the grains in the metallographic structure of the hot-rolled steel sheet will grow to be coarse grains. In addition, if so, the grains will more abnormally grow due to the uneven strain as inevitably formed in the sheet just after the sheet is coiled, by which the surface properties of the sheet will be much worsened.

However, if the coiling temperature is lower than 400°C in both cases, the shape of the sheet will be bad, and the hardness of the sheet will be uneven in the transverse direction of the sheet. As a result, the shape of the drums as made from the steel sheet will be not good, and the function of the drums will be poor. For these reasons, it is desirable that the coiling temperature for the steel sheet based on the first technical idea falls between 400 and 680°C and that for the steel sheet based on the second technical idea falls between 400 and 700°C: In order that the thickness of the mill scale in the mill scale-coated, hot-rolled sheet is at most 5 µm, it is desirable that the coiling temperature is low, or that is, 600°C or lower.

The hot-rolled steel sheet as produced according to the process comprising the above-mentioned steps in that order is used for producing drums in the invention. Specifically, just after having been rolled and still having the "mill scale", the sheet of the invention can be directly used for producing drums. Even when the steel sheet is used as it is without being further processed, the drums made of it have a fine iron oxide phase (mill scale) on their inner surface, and the corrosion resistance and the abrasion resistance of the steel sheet are both good.

Regarding the composition of the mill scale, it is desirable that the mill scale is in the form of a film containing magnetite in an amount of at least 80 % by volume. The amount of magnetite therein may be so controlled as to fall the desired range, by controlling the temperature of the steel strip being coiled and by conditioning the atmosphere in the coiling step to thereby promote the transformation of wustite into magnetite on the surface of the strip. If the magnetite content is smaller than 80 %, the mill scale formed will easily peel off, and the steel sheet having such mill scale is not suitable to drums. If the thickness of the mill scale is larger than 5 µm such thick mill scale will also easily peel off. Therefore, it is desirable that the thickness of the mill scale is at most 5 µm. If desired, the hot-rolled steel sheet of the invention may be used, after the mill scale is removed therefrom. To remove the mill scale, the sheet may be washed with acid. The thickness of the mill scale may be obtained as follows: A sample of the steel sheet having a predetermined surface area is prepared, and this is washed with hydrochloric acid containing an inhibitor that acts to prevent the dissolution of the base steel by the acid, thereby removing the scale layer from the surface of the sample. The difference in the weight of the sample is obtained by subtracting the weight of the washed sample from that of the original sample, and this is divided by the surface area and the specific gravity of the sample to obtain the thickness of the mill scale.

### Step of washing hot-rolled steel sheet with acid:

For washing the hot-rolled steel sheet with acid, any specific condition is not defined. The steel sheet may be washed with any acid in any condition in which the scale can be removed from the surface of the sheet. Therefore, any ordinary method for washing steel sheets with acid is employable herein. For example, the surface scale may be removed with an acid, such as hydrochloric acid, sulfuric acid or the like. It is desirable that the acid-washed steel sheet is coated with oil so as to prevent the sheet from rusting. The hot-rolled steel sheet thus washed with acid to remove its scale is generally temper-rolled, for example, in the manner to be mentioned below.

### Temper-rolling step for hot-rolled steel sheet:

The coiled, hot-rolled steel sheet may be temper-rolled, prior to being formed into drums. The temper-rolling of the hot-rolled steel sheet is effected for the purpose of dismissing or reducing the yield point elongation of the steel sheet, and for the purpose of controlling the surface roughness of the sheet and of improving the shape of the sheet (for example, for reducing edge elongation, belly elongation, etc.). In the invention, it is desirable that the temper-rolling reduction ratio is at most 5 %. If the reduction ratio is larger than 5 %, not only the ductility of the steel sheet is lowered but also the variation in the yield point noted above increases, thereby causing various problems. For example, if so, when the steel sheet is formed into drums, the spring back amount of the steel sheet (this indicates the degree of rebounding of the steel sheet being formed, owing to the elastic force of the sheet) varies. Where only the surface roughness of the steel sheet is desired to be controlled by the temper-rolling, the temper-rolling reduction ratio preferably falls between 1 % and 5 %.

The hot-rolled steel sheet from which the mill scale has been removed may be further processed on its surface, and then formed into drums. The surface treatment for this includes, for example, tin plating, chromium plating, nickel plating, nickel-chromium plating, zinc plating (galvanizing), etc. Needless-to-say, the drums made of the sheet may be chemically processed on their inner and outer surfaces in any ordinary manner, for example, with zinc phosphate, iron phosphate or the like. After having been thus plated or chemically treated, the steel sheet may be further painted or coated with an organic resin film. The thus painted or coated sheet may be formed into drums in any ordinary manner with no problem.

The hot-rolled steel sheet as produced under the conditions noted above in accordance with the first technical idea contains solute N in an amount of at least 0.0010 % by weight and has a high degree of elongation of at least 35 %. The degree of elongation of the sheet is herein measured in a tensile test. In the test, a sample of the steel sheet is so prepared that its machine direction shall correspond to the circumferential direction of the cylindrical body to be a drum.

The drums made of the hot-rolled steel sheet of the invention have higher room-temperature strength and high-temperature strength (at 300 to 800°C) than those of conventional steel sheets. In order that the drums of the invention could stably have the intended strength, it is desirable that the amount of solute N in the steel sheet falls between 0.0015 and 0.0100 % by weight. The solute N content may be controlled depending on the combination of the total N content of the steel melt to be the sheet and the hot-rolling condition for the sheet. The high-temperature strength as referred to herein indicates the strength at a temperature falling between 300 and 800°C, and includes the creep strength. Its value may be measured in any ordinary high-temperature tensile test.

The hot-rolled steel sheet of the invention has an aging index of not smaller than 3 kgf/mm². The aging index is obtained as follows: A tensile test sample is prepared from the hot-rolled steel sheet, which is loaded to have a tensile pre-strain of 7.5 %. Then, the sample is unloaded, and aged at 100°C for 60 minutes. This is subjected to a tensile test to measure its yield stress. Before being aged, the sample is subjected to the same tensile test. The difference between the deformation stress of the non-aged sample and the yield stress of the aged sample is obtained, and this indicates the aging index of the sample. The aging index of the steel sheet may be varied by varying the solute N content thereof. In order that the steel sheet has high local deformation resistance and high high-temperature strength, its aging index shall be at least 5 kgf/mm².

On the other hand, the hot-steel sheet of the invention based on the second technical idea has a metallographic structure of fine and uniform ferrite grains having a mean grain size of not larger than 10 µm, and this has a high degree of elongation of 35 % or higher. For stable formation of drums, the ductility of the material for the drums is an important factor. The steel sheet of the invention satisfies the level of elongation.

Where drum manufacturers desire steel sheets having higher strength than ordinary ones, it is recommended that the steel sheet of the invention is so controlled as to have a mean grain size of not larger than 7 µm by varying the amount of C, Mn and Nb in the sheet and by varying the coiling temperature for the sheet . The drums of the hot-rolled steel sheet of the invention thus produced in that manner have higher room-temperature strength and higher high-temperature strength (concretely, at temperatures falling between 300 and 600°C) than those of any conventional steel sheets, and the former do not leak the contents even in the drop test at -40°C. The high-temperature strength as referred to herein indicates the strength at a temperature falling between 300 and 600°C, and includes the creep strength. Its value may be measured in any ordinary high-temperature tensile test (in which the cross head speed is around 1 mm/min or so).

The hot-rolled steel sheets of the invention and their production methods have been described hereinabove, along with the characteristics of the sheets. The invention further encompasses cold-rolled sheets, and their production methods are described below.

For producing the cold-rolled sheets, the acid-washed, hot-rolled steel sheets mentioned hereinabove are further cold-rolled and then annealed, for example, in the manner mentioned below.

### Cold-rolling step:

It is recommended that the suitable thickness of the hot-rolled sheet (hereinafter, mother sheet) to be cold-rolled falls between 1.8 and 3.7 mm. As previously mentioned in the above, the acid-washing condition for the hot-rolled steel sheet is not described herein. The cold-rolling reduction ratio preferably falls between 60 and 85 %. The mill scale-coated, hot-rolled steel sheet in which the thickness of the mill scale is 5 µm or smaller may be directly cold-rolled without being washed with acid. The cold-rolled steel sheet is then annealed.

### Annealing step for cold-rolled steel sheet:

The annealing is effected at a temperature not lower than the recrystallization temperature of the steel sheet. If the cold-rolled steel sheet is annealed at a temperature lower than the recrystallization temperature of the sheet, the metallographic structure of the annealed sheet will be a non-recrystallized or partially-recrystallized one. The sheet having such a non-recrystallized or partially-recrystallized structure has poor ductility though its strength is high. As a result, the sheet is often softened to a great extent at high temperatures, and, in addition, its quality is uneven in the rolling direction and also in the transverse direction. After all, the sheet is difficult to shape. For these reasons, in the invention, the annealing temperature at which the cold-rolled sheet is annealed is defined to be not lower than the recrystallization temperature of the sheet. For the sheet, so-called continuous annealing is employed.

The heat cycle for the annealing may be any simple heating-cooling cycle. After having been annealed, the sheet may be subjected to so-called overaging, for which the annealed sheet is gradually cooled or soaked for a while at a temperature falling between 400 and 450°C. Through the overaging, the quality of the sheet does not change so much though the aging ability of the sheet will be lowered in some degree. Therefore, the annealing cycle for the sheet of the invention may comprise overaging with no problem.

After having been thus annealed, the cold-rolled steel sheet may be directly used for forming drums. However, in the invention, the annealed sheet may be optionally temper-rolled or surface-treated to further improve its quality. The temper-rolling step and the surface-treating step may be the same as those for the hot-rolled sheet mentioned hereinabove, and the description of the steps is omitted herein.

The cold-rolled sheet of the invention as obtained through the above-mentioned cold-rolling and annealing steps according to the first technical idea also has a solute N content of not smaller than 0.0010 % by weight and a high degree of elongation of not smaller than 35 % like the above-mentioned hot-rolled steel sheet. Accordingly, drums made of the cold-rolled steel sheet are, after having been painted and baked, to have high room-temperature strength and high high-temperature strength as a result of the baking hardening treatment. For this, the solute N content of the sheet is controlled depending on the combination of the total N content of the steel melt to be the sheet, the hot-rolling and cold-rolling conditions for the steel slab and the annealing conditions for the rolled sheet.

The cold-rolled steel sheet has an aging index of at least 5 kgf/mm². The value of the aging index and the method for controlling it are the same as those mentioned hereinabove for the hot-rolled steel sheet, and the description of them is omitted herein.

On the other hand, the cold-rolled steel sheet of the invention based on the second technical idea also has a fine and uniform metallographic structure having a mean grain size of not larger than 7 µm and has a high degree of elongation of at least 35 %, like the hot-rolled sheet based on the same. Therefore, the drums made of the cold-rolled steel sheet also have high room-temperature strength and high high-temperature strength, like those made of the hot-rolled steel sheet.

Next, the drum of the invention is further described hereinunder. For the drum composed of a body plate, a top board and a base board, any of the above-mentioned, mill scale-coated hot-rolled steel sheet, mill scale-free hot-rolled steel sheet, or cold-rolled steel sheet is used. Accordingly, the drum of the invention is thin and lightweight, and its quality is comparable to or better than the quality of any conventional drums. In this case, the steel sheet of the invention is used for all the body plate, the top board and the base board of the drum. However, it may be used for any of these, and the drum of which any of the body plate, the top board and the base board is made of the steel sheet of the invention is within the scope of the invention. This is because drums have many applications, and it is unnecessary that all steel sheets of drums are to have any excessive characteristics. Where the steel sheet of the invention is positioned in the necessary sites of drums, the drums may be well lightweight and the production costs for them may be reduced. Regarding the drum-forming technique including forming, working, welding and surface-treating operations, any conventional ones are employable herein.

### (Examples)

First, Examples of the steel sheet of the invention based on the first technical idea are described below.

### (Example 1)

Steel melts having the chemical composition shown in Table 1 were prepared in a converter, and these were cast in a continuous casting manner to produce a large number of steel slabs having a thickness of 260 mm. The steel slabs were hot-rolled. 0.5 to 1.5 seconds after the finish of the rolling, the rolled sheets were cooled with water, or without being cooled with water, they were coiled. Thus were produced hot-rolled steel sheets having a thickness of 1.22 mm. Next, the hot-rolled steel sheets were temper-rolled. The final hot-rolled steel sheets thus produced had a thickness of 1.20 mm. The hot-rolling condition and the coiling temperature are shown in Table 2. Steel D in Table 1 corresponds to a conventional sheet for drums. The underlined data for the elements in Table 1 and the underlined steel samples in Table 2 are "outside the scope of the invention", and the same shall apply to all Examples given hereinunder.

The tensile characteristics (tensile strength at room temperature (25°C) and at 600°C), and the aging index of each hot-rolled sheet were measured. The data thus measured are all shown in Table 2.

**Table 1**

| (wt.%) | | | | | | | | |
|---|---|---|---|---|---|---|---|---|
| Code | C | Si | Mn | P | S | Al | N | Remarks |
| A | 0.035 | 0.01 | 0.15 | 0.010 | 0.006 | 0.035 | 0.0110 | Sample of the Invention |
| B | 0.025 | 0.01 | 0.25 | 0.005 | 0.005 | 0.045 | 0.0065 | Sample of the Invention |
| C | 0.075 | 0.01 | 0.10 | 0.006 | 0.008 | 0.045 | 0.0055 | Sample of the Invention |
| D | 0.050 | 0.01 | 0.20 | 0.011 | 0.007 | 0.048 | 0.0015 | Conventional Sample |
| E | 0.150 | 0.01 | 0.10 | 0.013 | 0.009 | 0.045 | 0.0065 | Comparative Sample |
| F | 0.040 | 0.50 | 0.10 | 0.013 | 0.009 | 0.050 | 0.0075 | Comparative Sample |
| G | 0.035 | 0.01 | 1.50 | 0.013 | 0.009 | 0.050 | 0.0085 | Comparative Sample |

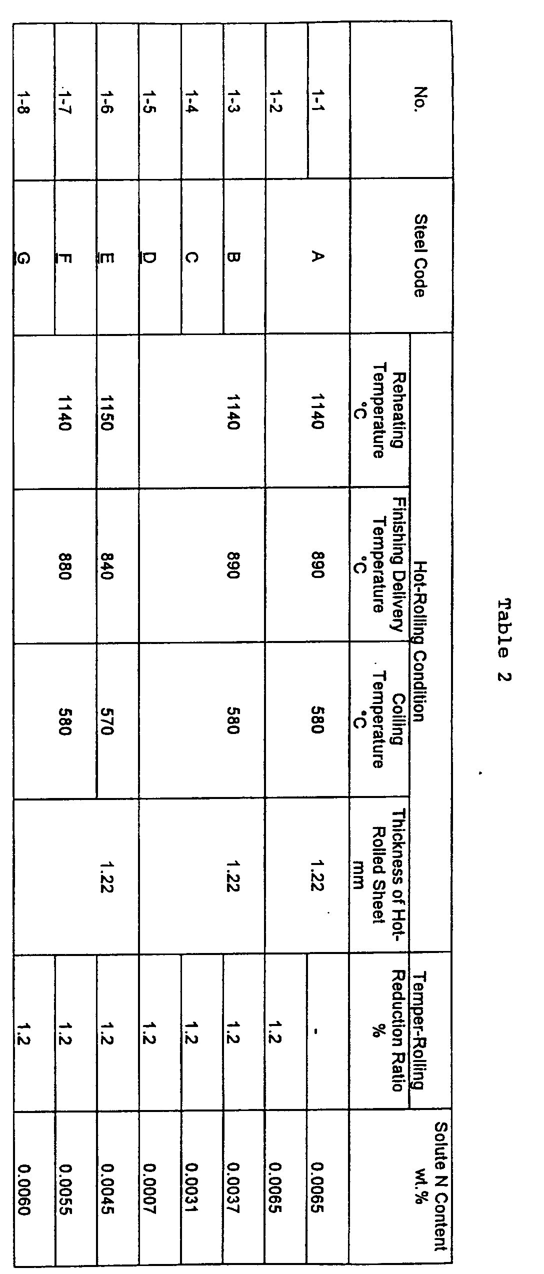

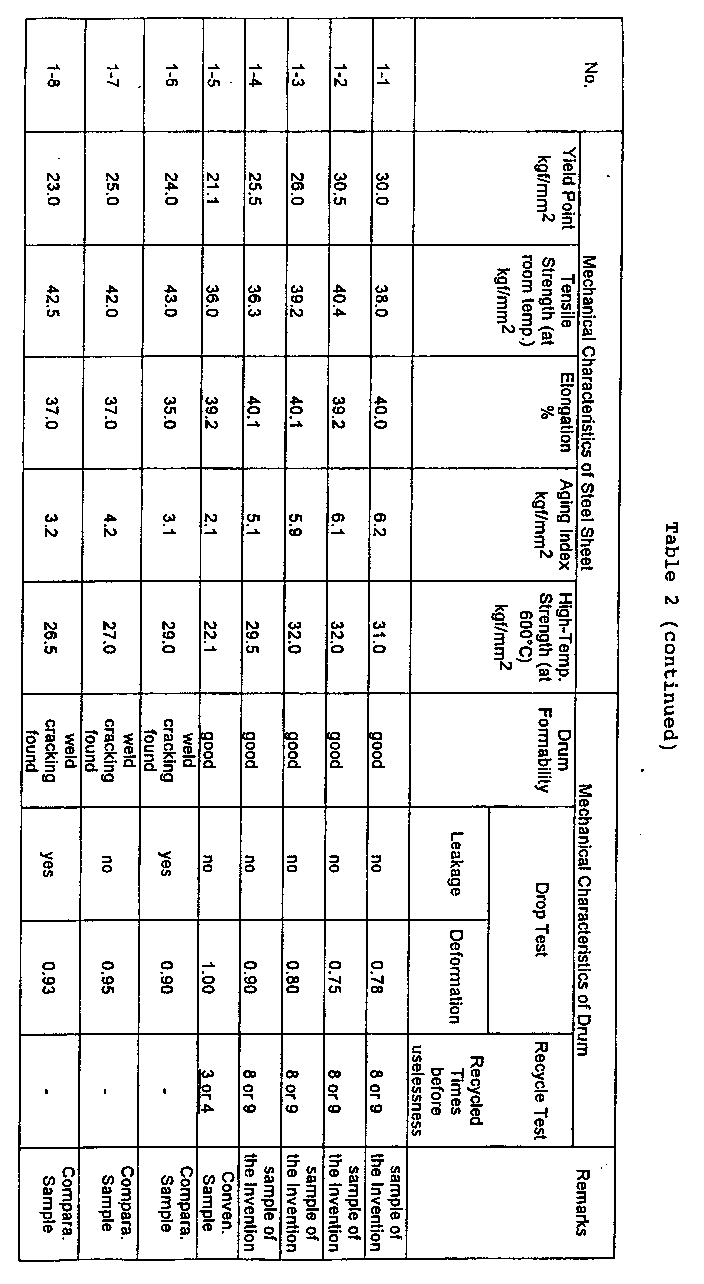

From Table 2, it is known that the hot-rolled steel sheets of the invention (Nos. 1-1 to 1-4) have a degree of elongation of higher than 39 %, and their tensile strength at room temperature (25°C) and even high-temperature strength at 600°C both increased without their ductility decreasing. In addition, these hot-rolled steel sheets have an aging index of higher than 5 kgf/mm², and their aging ability is higher than that of the conventional sample (No. 1-5).

Next, these hot-rolled steel sheets were formed into top boards and base boards for drums through pressing, which were lids and bottoms of drums. A body plate of each sheet was formed into cylindrical bodies through bending, and the both ends were welded together through seaming to produce bodies of drums. The top board and the base board were bonded to the both ends of the body through "seaming". Thus were produced closed-type, 200-liter drums. The outer surface of each drum was painted with an epoxy-based paint, and the inner surface thereof was not processed, or that it, it was left to have mill scale formed thereon. The coated paint was baked at 170°C.

While being formed into the drums, the hot-rolled steel sheets were checked for their bending workability and weldability, on the basis of which the sheets were qualitatively evaluated for their drum-formability. The drums thus formed were filled with water, and dropped down from a height of 1.2 meters, whereupon the drums were observed as to whether or not they leaked water and how much they were deformed (drop test). In the drop test, the degree of deformation was represented by a relative value based on the degree of deformation of the sample of Steel D (No. 1-5) of being 1.00. On the other hand, each sheet was formed into so-called open-type drums, which were subjected to a recycle test. Precisely, each open-type drum was repeatedly exposed to a simulated cycle of "high-temperature heating (for incinerating the remaining contents) → shot-blasting → cooling". In the cycle, steel shot (steel balls) were used for the shot-blasting, and the blasting condition was the same for all drums. After each cycle, the degree of deformation of each drum was measured, and the number of cycles repeated for each drum was counted before the drum was judged no more usable from the measured degree of deformation, and this indicates the number of recycled times before uselessness. The data of the drums thus measured in those tests are all shown in Table 2, in the column of mechanical characteristics of drum.

From Table 2, it is known that the hot-rolled steel sheets of the invention all have good drum-formability, and the drums of the sheets did not leak water in the drop test. In addition, it is also known therefrom that, in the drop test, the degree of deformation of the drums of the invention was lower than that of the conventional drum; and this means that the mechanical strength of the drums of the invention is high. It is further known that, in the recycle test, the recycled times before uselessness of the drums of the invention are larger than those of the conventional drum.

Moreover, the hot-rolled steel sheets of the invention well hardened in spontaneous aging at room temperature for about 1 day, even when they were not subjected to artificial, accelerated aging treatment, for example, to aging by post-baking. In addition, even when the condition for the "post-baking after painted" as applied to the drums of the steel sheets of the invention was varied delicately, the steel sheets were not sensitive to the variation, and the drums had stable mechanical strength. Specifically, when the drums were kept at a temperature of about 100°C or more for only 10 minutes or so, their mechanical strength was comparable to or higher than that of conventional drums. At present, from the viewpoint of energy-saving in the art, lowered baking temperatures are desired. The drums of the hot-rolled steel sheets of the invention shall have satisfactorily high mechanical strength even when they are baked at such low temperatures.

### (Example 2)

A large number of steel slabs were prepared, which had a basic chemical composition of 0.041 wt.% C - 0.005 wt.% Si - 0.15 wt.% Mn - 0.009 wt.% P - 0.005 wt.% S - 0.039 wt.% Al and of which the N content was varied within the range of from 0.0020 to 0.0142 % by weight as in Table 3. These steel slabs were hot-rolled, then cooled with water and coiled. The rolling condition and the coiling temperature are shown in Table 3.

The reheating condition for the steel slabs to be hot-rolled and the finishing delivery temperature of the hot-rolled steel sheets were varied so as to vary the solute N content of the hot-rolled steel sheets. All these hot-rolled steel sheets were temper-rolled, and finally they had a thickness of 0.8 mm. These hot-rolled steel sheets were formed into closed-type, 200-liter drums in the same manner as in Example 1. The outer surface of each drum was coated with a melamine-based resin. After having been coated, the drums were baked at 200°C. The inner surface of each drum was not processed, or that it, it was left to have mill scale formed thereon.

At room temperature (25°C) or at 300°C, an external concentrated load was applied to each drum to make it have compression stress in its circumferential direction, whereupon the degree of deformation of each drum was measured. The data obtained are all shown in Table 3.

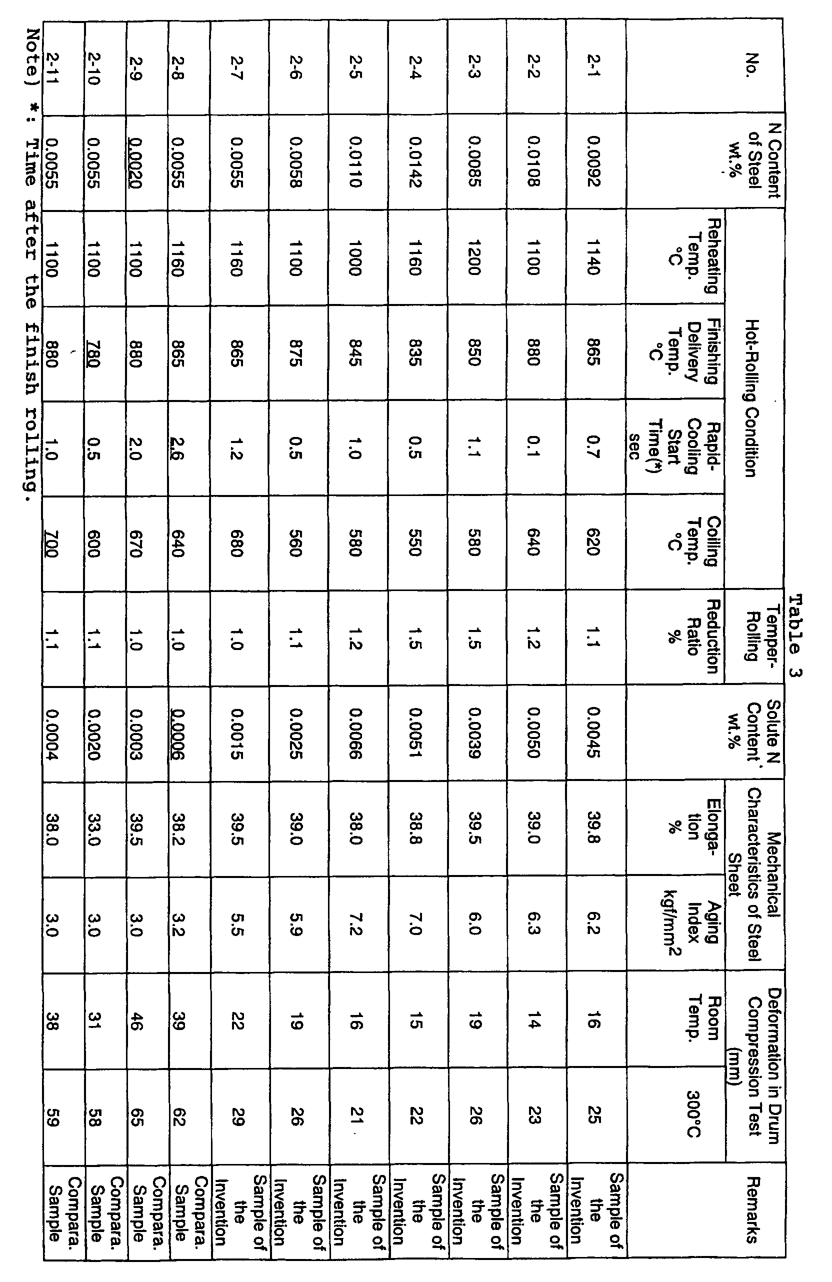

From Table 3, it is known that the degree of deformation of the drums of the steel sheets of the invention (Nos. 2-1 to 2-7) that were loaded at room temperature or a high temperature is extremely low at both temperatures. In addition, the inner pressure of each drum was increased by applying a water pressure to the drum inside, and the degree of deformation of the drums was measured. In this test, it was confirmed that the degree of deformation of the drums of the invention was smaller than that of the conventional drums in some degree, though the difference in the deformation degree in this test was not so clear as in the previous test in which the external compression stress load was applied to the drums outside. The data in these tests mean that the drums of the steel sheets of the invention have high mechanical strength against both inner pressure and external pressure.

### (Example 3)

Steel melts having the chemical composition shown in Table 4 were cast in the same manner as above to produce a large number of steel slabs having a thickness of 200 mm. The steel slabs were hot-rolled. 0.5 to 1.5 seconds after the finish rolling, the rolled sheets were cooled with water, and then coiled. Thus were produced hot-rolled steel sheets having a thickness of 1.22 mm. Next, the hot-rolled steel sheets were washed with acid, and then temper-rolled. The final hot-rolled steel sheets thus produced had a thickness of 1.2 mm, and they had no mill scale on their surface. The rolling condition and the coiling temperature are shown in Table 5.

The tensile characteristics and the aging index of each hot-rolled sheet were measured in the same manner as in Example 1. The data thus measured are all shown in Table 5.

**Table 4**

| (wt.%) | | | | | | | | |
|---|---|---|---|---|---|---|---|---|
| Code | C | Si | Mn | P | S | Al | N | Remarks |
| H | 0.035 | 0.01 | 0.10 | 0.009 | 0.005 | 0.040 | 0.0120 | Sample of the Invention |
| I | 0.040 | 0.01 | 0.17 | 0.005 | 0.005 | 0.051 | 0.0092 | Sample of the Invention |

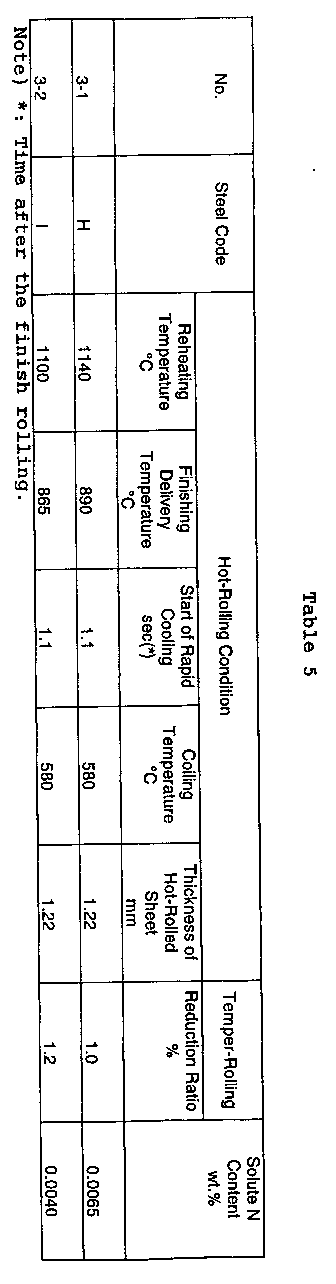

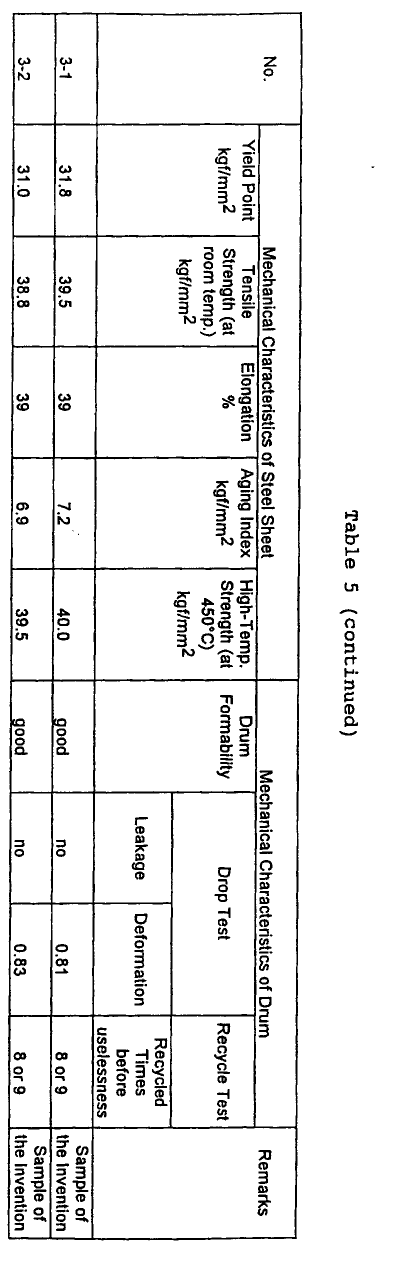

These steel sheets (Nos. 3-1 and 3-2) have a degree of elongation of higher than 35 %, and their tensile strength at room temperature (25°C) and even high-temperature strength at 450°C both increased without their ductility decreasing. In addition, it is known that these steel sheets have an aging index of higher than 5 kgf/mm², and their aging ability is higher than that of the above-mentioned conventional sample (No. 1-5) (see Table 2).

Next, these steel sheets were formed into closed-type, 200-liter drums in the same manner as above. The drums were coated with a melamine-based resin on their outer surface, but their inner surface was not processed, or that is, it was left to have mill scale formed thereon. The thus-coated drums were "post-baked at 180°C". While being formed into the drums, the steel sheets were checked for their bending workability and weldability, on the basis of which the sheets were qualitatively evaluated for their drum-formability. In addition, the drums were subjected to the drop test and the recycle test as in Example 1.

The data of the drums thus measured in those tests are all shown in Table 5 in the column of mechanical characteristics of drum. From Table 5, it is known that the steel sheets of the invention all have good drum-formability, and the drums of the sheets did not leak water in the drop test. In addition, it is also known therefrom that, in the drop test, the degree of deformation of the drums of the invention was lower than that of the conventional drum, and this means that the mechanical strength of the drums of the invention is high. It is obvious that, in the recycle test, the recycled times before uselessness of the drums of the invention are larger than those of the conventional drum. This further supports the increased mechanical strength of the drums of the invention.

### (Example 4)

From steel melts having the chemical composition shown in Table 6, produced were a large number of steel slabs having a thickness of 260 mm. The steel slabs were hot-rolled. 0.1 to 1.5 seconds after the finish rolling, the rolled sheets were cooled with water, and then coiled. Thus were produced hot-rolled steel sheets. Next, the hot-rolled steel sheets were washed with acid, and then cold-rolled. The cold-rolled steel sheets had a thickness of 1.21 mm. These were annealed in a continuous annealing manner, and temper-rolled. The final sheets had a thickness of 1.2 mm. The rolling conditions, the coiling temperature and the annealing condition are shown in Table 7.

The tensile characteristics (tensile strength at room temperature (25°C) and at 500°C; for the tensile strength at 500°C, obtained was the 0.5 % deformation stress at 500°C) and the aging index of each cold-rolled sheet were measured in the same manner as above. The data thus measured are all shown in Table 8.

**Table 6**

| (wt.%) | | | | | | | | |
|---|---|---|---|---|---|---|---|---|
| Code | C | Si | Mn | P | S | Al | N | Remarks |
| J | 0.041 | 0.01 | 0.15 | 0.010 | 0.007 | 0.035 | 0.0110 | Sample of the Invention |
| K | 0.025 | 0.01 | 0.25 | 0.005 | 0.005 | 0.045 | 0.0080 | Sample of the Invention |
| L | 0.080 | 0.01 | 0.10 | 0.006 | 0.008 | 0.045 | 0.0055 | Sample of the Invention |
| M | 0.050 | 0.01 | 0.20 | 0.011 | 0.007 | 0.060 | 0.0022 | Conventional Sample |
| N | 0.150 | 0.01 | 0.10 | 0.013 | 0.009 | 0.045 | 0.0065 | Comparative Sample |
| O | 0.045 | 0.30 | 0.10 | 0.013 | 0.009 | 0.050 | 0.0075 | Comparative Sample |
| P | 0.035 | 0.01 | 1.50 | 0.013 | 0.009 | 0.035 | 0.0085 | Comparative Sample |

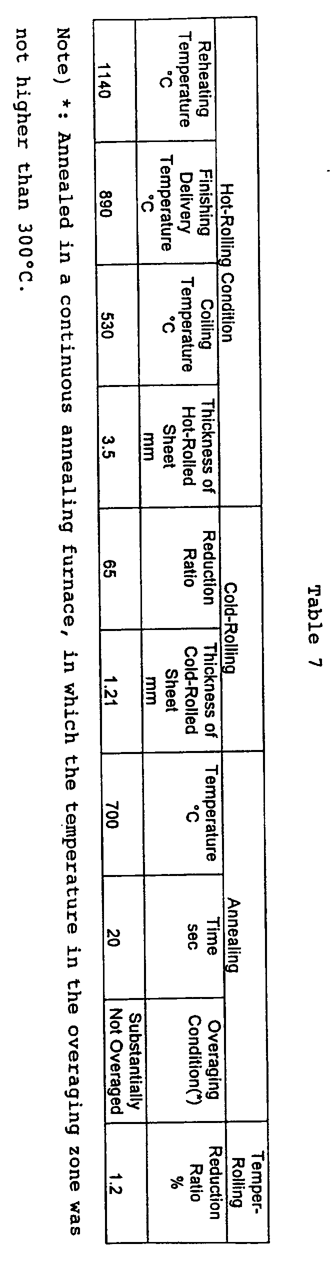

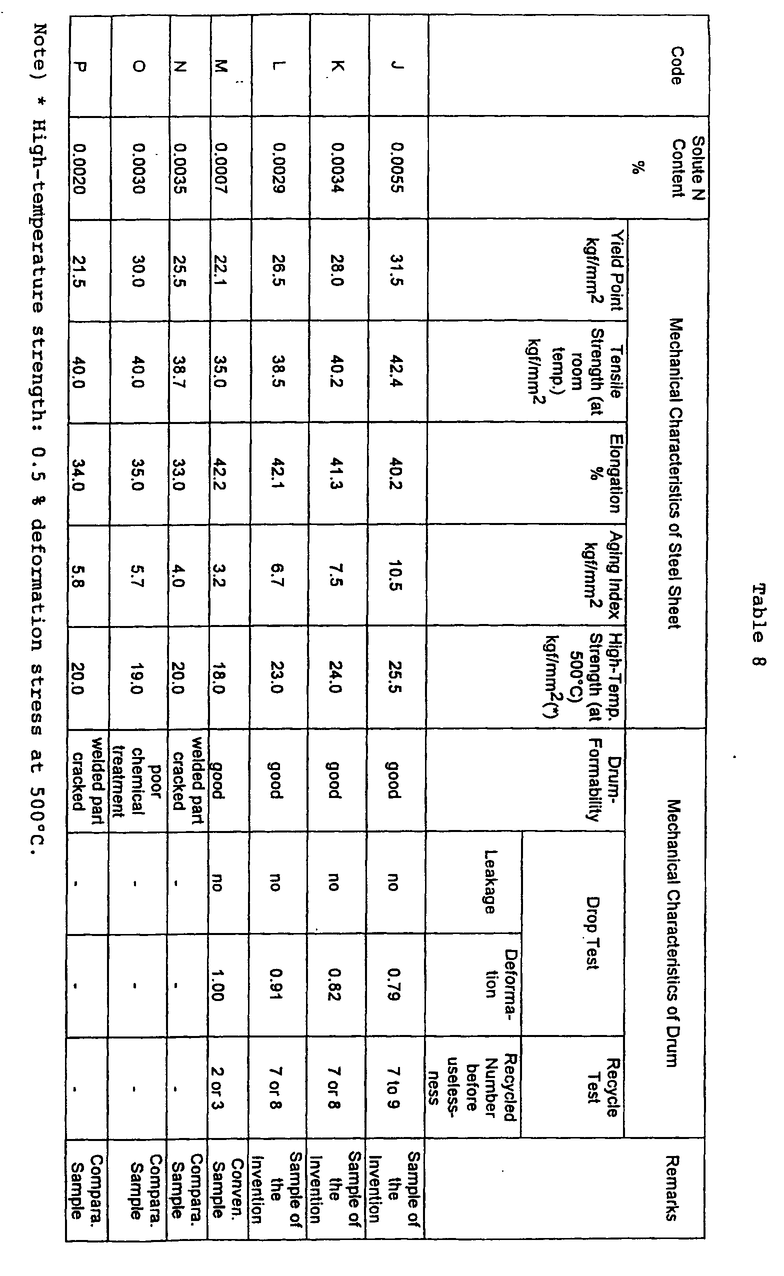

From Table 8, it is known that the steel sheets of the invention (Codes J to L) have a degree of elongation of higher than 40 %, and their tensile strength at room temperature (25°C) and even high-temperature strength at 500°C both increased without their ductility decreasing. In addition, it is also known therefrom that the steel sheets of the invention have an aging index of higher than 5 kgf/mm², and their aging ability is higher than that of the conventional sample (Code M). The comparative samples (Codes N to P), of which the chemical composition is outside the scope of the invention, have a low degree of elongation, and their ductility is poor.

Next, these steel sheets were formed into closed-type, 200-liter drums. The drums were painted with a melamine-based paint on their outer surface, and their inner surface was chemically processed with zinc phosphate. The thus-painted drums were "post-baked at 180°C". While being formed into the drums, the steel sheets were checked for their workability and weldability, on the basis of which the sheets were qualitatively evaluated for their drum-formability.

In addition, the drums were subjected to the "drop test" and the "recycle test" as in Example 1.

The data in those tests are all shown in Table 8 in the column of mechanical characteristics of drum.

As in Table 8, it is obvious that the steel sheets of the invention all have good drum-formability, and the drums of the sheets did not leak water in the drop test. In addition, it is also obvious that, in the drop test, the degree of deformation of the drums of the invention was lower than that of the conventional drum, and this means that the mechanical strength of the drums of the invention is high. In the recycle test in which open-type drums that had been produced in the same manner as above were tested, the recycled times before uselessness of the drums of the invention are larger than those of the conventional drum. This further supports the surely increased mechanical strength of the drums of the invention.

Next, the drums were, without being baked, directly subjected to the "drop test"; or, after having been baked, they were subjected to the "drop test". The degree of deformation of the baked drums was compared with that of the non-baked ones. As a result, the decrease in the degree of deformation of the conventional, baked drum was at most 3 % or so, but the decrease in the degree of deformation of the baked drums of the invention was about 20 % or so. Thus, the deformation resistance of the baked drums of the invention significantly increased in the drop test. This means that the steel sheets of the invention have excellent bake-hardening ability, and the mechanical strength of the drums of the invention is greatly increased due to the bake-hardening ability of the sheets.

Moreover, the steel sheets of the invention well hardened in spontaneous aging at room temperature for about 1 day, even when they were not subjected to the above-mentioned "accelerated aging treatment" after having been formed into drums. It was confirmed that the increase in the strength of the spontaneously-aged sheets of the invention was at least 80 % of the increase in the strength of the sheets that had been completely aged through post-baking. In addition, the steel sheets are not so much sensitive to the delicate variation in the condition for "post-baking", and the drums of the steel sheets all the time have stable mechanical strength.

Furthermore, when the drums of the steel sheets of the invention are heated at about 100°C or higher for a few minutes, the strength of the drums con be at least 95 % of the strength of completely-aged drums (concretely, aged at 210°C for 20 minutes). Even if the heating temperature is elevated further more, the change in the strength is small. Accordingly, it is understood that, when the drums of the steel sheets of the invention are heated at 100°C or higher for post-baking (though the temperature will be unsatisfactory for post-baking), they well ensure the intended high mechanical strength. Even though the temperature in the production process for the drums of the invention varies, the drums produced stably ensure the high mechanical strength.

However, the drums of conventional steel sheets could not satisfactorily ensure high mechanical strength, when baked at such a low temperature for such a short period of time. It appears that the conventional drums indispensably require baking at 170°C +/- 10°C for 20 minutes.

The drums of the steel sheets of the invention were filled with oil, and subjected to a drop test at a low temperature of -40°C (hereinafter, low-temperature drop test). In the test, the drums gave the same results as those in the room-temperature drop test.

### (Example 5)

In the same wanner as previously, a large number of steel slabs were prepared, which had a basic chemical composition of 0.035 wt.% C - 0.01 wt.% Si - 0.35 wt.% Mn - 0.008 wt.% P - 0.005 wt.% S - 0.035 wt.% Al and of which the N content was varied within the range of from 0.0020 to 0.0150 % by weight as in Table 9. These steel slabs were hot-rolled, then cooled with water and coiled to give hot-rolled steel sheets. In this process, the reheating condition, the hot-rolling condition and the finish-rolling condition were varied so as to vary the solute N content of the final products, cold-rolled steel sheets. Next, these hot-rolled steel sheets were washed with acid, then cold-rolled, annealed in a continuous annealing manner (the soaking time was 40 seconds and kept constant), and temper-rolled in that order. The thickness of the final sheets was 1.0 mm. The rolling conditions, the coiling temperature and the annealing condition are shown in Table 9.

These cold-rolled steel sheets were formed into closed-type, 200-liter drums in the same manner as above. The outer surface of each drum was painted with a melamine paint, and the inner surface thereof was chemically processed with zinc phosphate. After having been painted, the drums were baked at 150°C.

At room temperature (25°C) or at 300°C, an external concentrated load was applied to each drum to make it have compression stress in its circumferential direction, whereupon the degree of deformation of each drum was measured. In addition, the drums were subjected to the recycle test as in Example 4.

The data measured and the test results are all shown in Table 9.

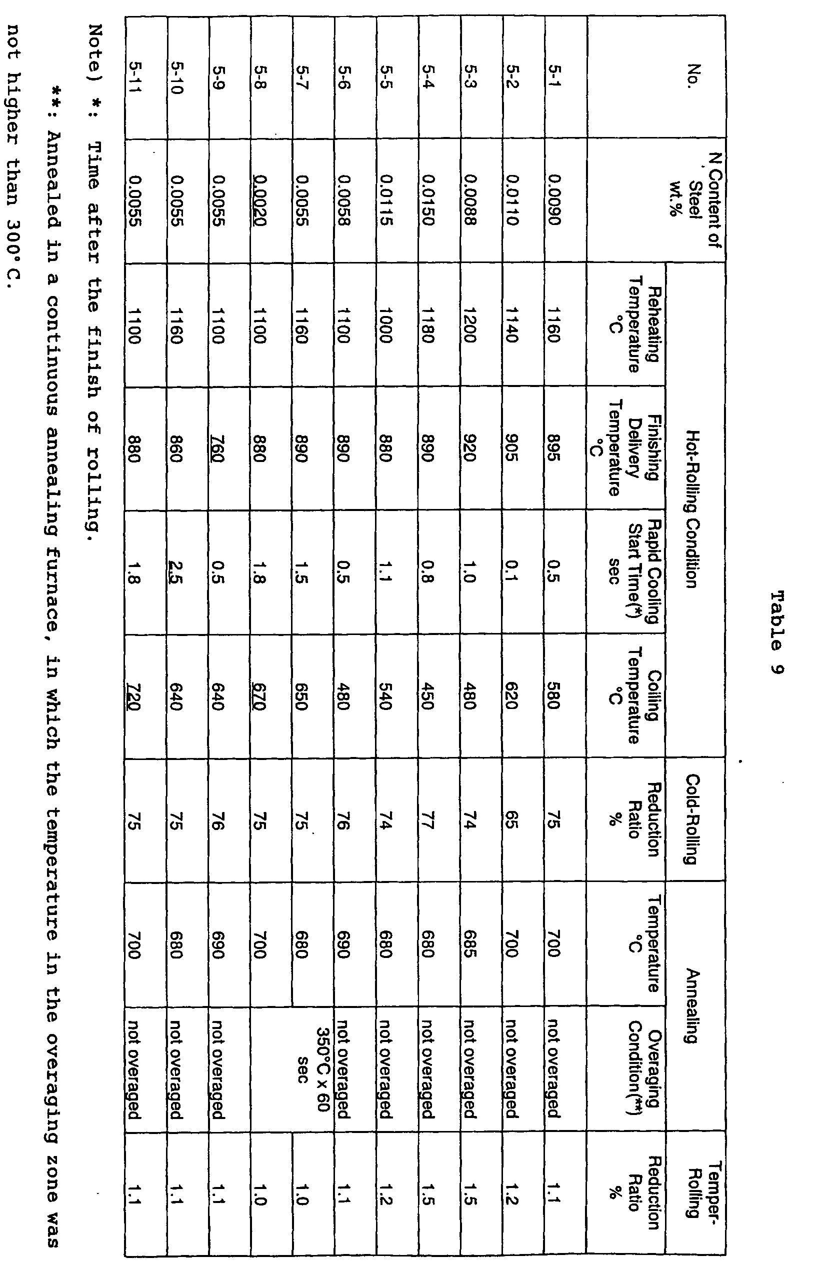

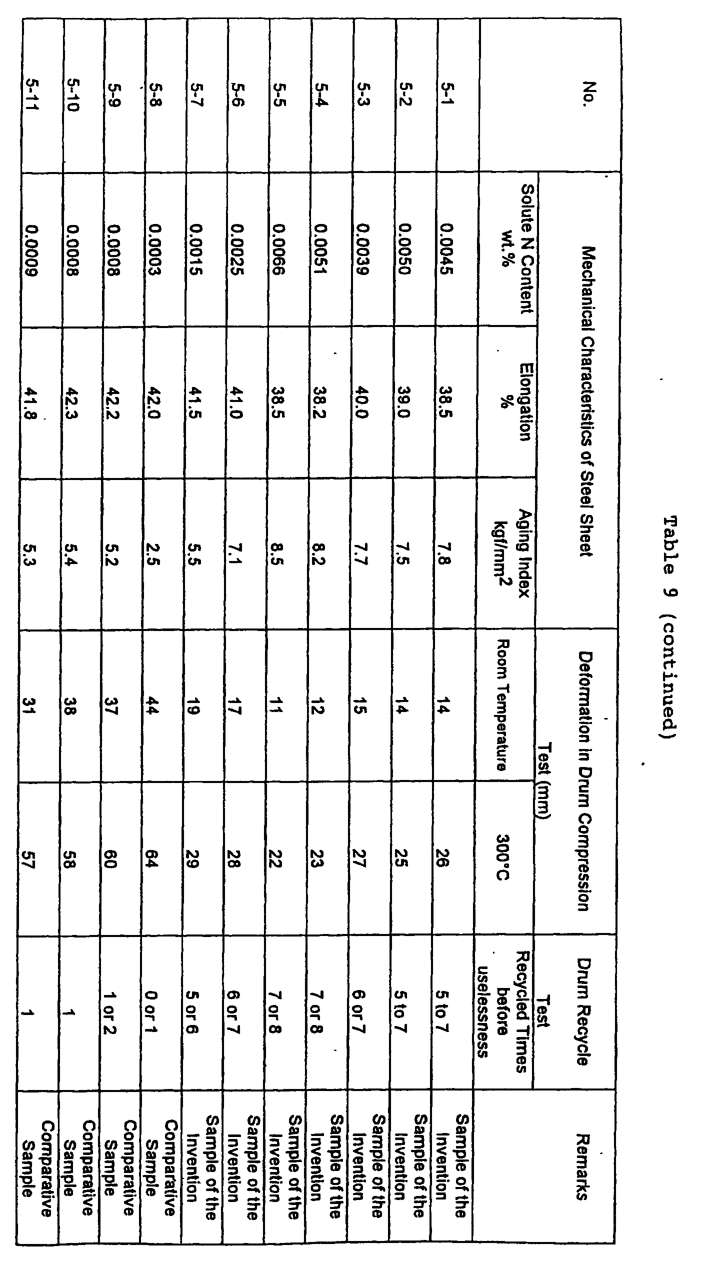

From Table 9, it is known that the degree of deformation of the drums of the steel sheets of the invention (Nos. 5-1 to 5-7) that were loaded at room temperature or a high temperature is extremely low at both temperatures, as compared with that of the comparative drums. In the drum recycle test, the recycled times before uselessness of the drums of the invention were much larger than those of the comparative drums.

In addition, the inner pressure of each drum was increased, and the degree of deformation of the drums was measured. In this test, it was confirmed that the degree of deformation of the drums of the invention was smaller than that of the conventional drums in some degree, though the difference in the deformation degree in this test was not so clear as in the previous test in which the external compression stress load was applied to the drums outside. Depending on their use, drums are often filled with hot contents (at about 70°C or so), and are closed before the hot contents therein are not still completely cooled. In that case, the drums shall have a negative inner pressure while they are cooled. If the drums in that case do not have good mechanical strength, they may buckle up under atmospheric pressure or even when small compression stress is applied thereto. The mechanical strength of the drums of the steel sheets of the invention is about 10 % higher than that of the drums of conventional steel. Therefore, even when filled with contents at higher temperatures or under more disadvantageous conditions, the drums of the steel sheets of the invention hardly buckle up. Accordingly, it is believed that the drums of the invention may be filled with contents in a more efficient manner and their shape is hardly deformed under atmospheric pressure.

Therefore, when the hot-rolled steel sheets and the cold-rolled steel sheets based on the first technical idea of the present invention, which has a degree of elongation of at least 35 % and a solute N content of at least 0.0010 % by weight, are formed into drums, their drum-formability is good and the drums thus formed can have increased mechanical strength at room temperature and even at high temperatures. As a result, it is expected that the number of recycled times before uselessness of the drums of the invention increase.

Next described are Examples of the steel sheet of the invention based on the second technical idea.

### (Example 6)

In the same manner as above, a large number of steel slabs having a thickness of 260 mm were prepared from steel melts having the chemical composition shown in Table 10. These steel slabs were hot-rolled, cooled, and then coiled. The hot-rolled steel sheets were optionally temper-rolled, and finally had a thickness of 2.4 mm. The cooling speed for all hot-rolled steel sheets in Examples to be mentioned below was 60°C/sec.

The hot-rolled steel sheets were washed with acid, and then cold-rolled under the condition shown in Table 11. The cold-rolled steel sheets were then annealed in a continuous annealing manner and temper-rolled, and finally had a thickness of 1.2 mm. The rolling conditions, the coiling temperature and the annealing condition are shown in Table 11.

The mean grain size of the grains constituting the cold-rolled steel sheets, and also the tensile characteristics (tensile strength at room temperature and 600°C), the bending characteristics and the repeated bending characteristics of the sheets were measured.

The mean grain size was represented in terms of the nominal grain size as stipulated in ASTM (American Society for Testing & Materials) Method E112-82. For this, a sample of a steel sheet to be tested was prepared from its cross section as cut in the direction vertical to the rolling direction, and its picture was taken through optical or electronic microscopic observation. Based on the picture, the mean grain size of the grains constituting the steel sheet was obtained. For testing the tensile characteristics, used were test pieces of JIS No. 5 as prepared from a steel sheet to be tested, and the machine direction of each test piece was to be the circumferential direction of the drums to be made of the steel sheet. For the high-temperature tensile strength at 600°C, test pieces were subjected to an ordinary high-temperature tensile test generally known in the art. The bending characteristics and the repeated bending characteristics are measured for the purpose of evaluating the "seamability" of steel sheets. For those, bending test pieces were prepared from each steel sheet to be tested by cutting the sheet in the direction vertical to the rolling direction, and tested for contact bendability and contact reboundability. In the test, each test piece was checked as to whether or not it was broken. (In Table 11, "O" indicates that the sample was not broken, and "X" indicates that the sample was broken.)

The test data are all shown in Table 11.

**Table 10**

| (wt.%) | | | | | | | | | | |
|---|---|---|---|---|---|---|---|---|---|---|
| No. | C | Si | Mn | P | S | Al | N | Nb | Ti | Remarks |
| Q | 0.042 | 0.01 | 0.15 | 0.010 | 0.007 | 0.035 | 0.0023 | 0.008 | <0.002 | Sample of the Invention |
| R | 0.025 | 0.01 | 0.25 | 0.005 | 0.002 | 0.045 | 0.0018 | 0.015 | <0.002 | Sample of the Invention |
| S | 0.055 | 0.01 | 0.10 | 0.006 | 0.006 | 0.045 | 0.0015 | 0.025 | 0.011 | Sample of the Invention |
| T | 0.040 | 0.01 | 0.10 | 0.011 | 0.007 | 0.038 | 0.0015 | <0.002 | <0.002 | Conven. Sample |

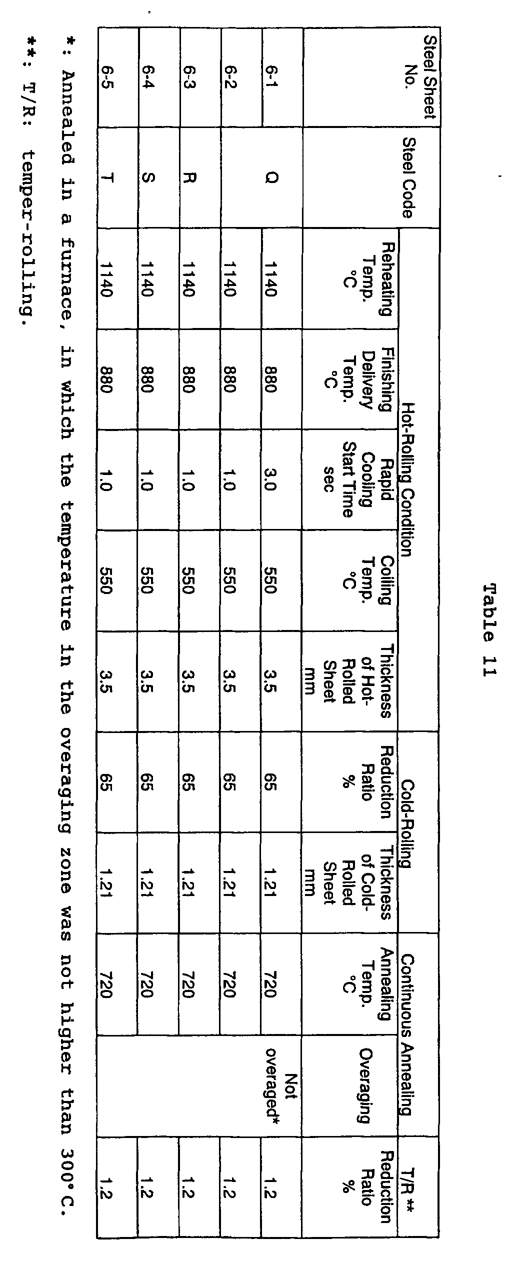

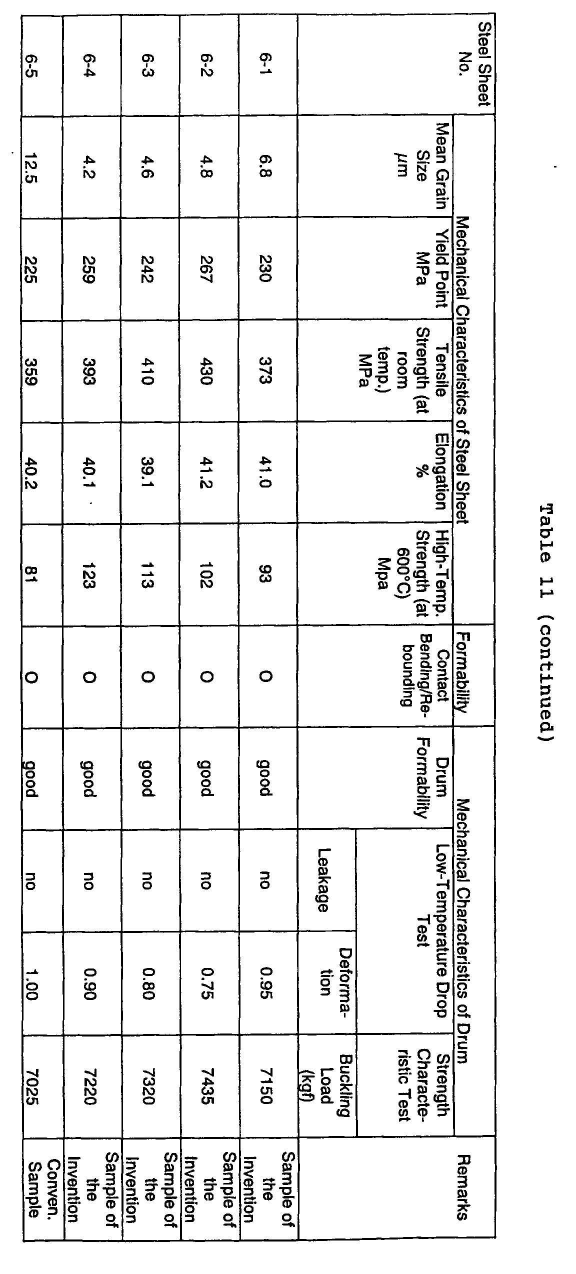

The data in Table 11 indicate that the cold-rolled steel sheets of the invention (Nos. 6-1 to 6-4) have a mean grain size of smaller than 7 µm and have a degree of elongation of 41 % or higher, and their tensile strength at room temperature (25°C) and even high-temperature strength at 600°C both increased without their ductility decreasing, as compared with the Nb-free, cold-rolled steel sheet (conventional sample). In addition, the cold-rolled steel sheets of the invention had good bending characteristics, and were well seamed with no problem.

Next, these cold-rolled steel sheets were formed into closed-type, 200-liter drums in the same manner as above. The drums were painted in an ordinary manner with an epoxy-based paint on their outer surface, and their inner surface was chemically processed with zinc phosphate. While being formed into the drums, the cold-rolled steel sheets were checked for their bending workability, shape freezability (the ability to retain the shaped form) and weldability, on the basis of which the sheets were qualitatively evaluated for their drum-formability. In order to check the drums for their mechanical strength characteristics, the empty drums were compressed in the axial direction and in the circumferential direction. In this test, the load as applied to each empty drum until the drum macroscopically buckled up under compression was measured, and the thus measured load indicates the buckling load to the drum. In addition, the drums were subjected to the low-temperature drop test in the same manner as above. In the drop test, the degree of deformation was represented by a relative value based on the degree of deformation of the conventional drum (made of the steel sheet of No. 6-5) of being 1.00. It has been confirmed that all drums that passed the low-temperature drop test carried out herein all the time pass the drop test as stipulated in JIS in which drums are dropped from a height of 1.8 meters at room temperature. Therefore, the drums produced herein were not subjected to the room-temperature drop test of JIS.

The test data are all shown in Table 11 in the column of mechanical characteristics of drum.

From Table 11, it is obvious that the cold-rolled steel sheets of the invention (Nos. 6-1 to 6-4) all have good drum-formability, and the buckling load to them as tested in the strength characteristic test is higher than that to the conventional steel sheet. In addition, it is known that, in the low-temperature drop test for the drums, the degree of deformation of the drums of the invention was lower than that of the conventional drum (this was made of the steel sheet of No. 6-5), and this means that the mechanical strength of the drums of the invention is high. In addition, in the low-temperature drop test, the drums of the invention did not leak liquid while having high mechanical strength, and they ensured safe storage of the contents therein. This suggests that the sheets of the invention all the time ensure reliable seamability irrespective of seaming modes.

### (Example 7)

A large number of steel slabs were prepared from steel melts having a composition of 0.035 wt.% C - 0.01 wt.% Si - 0.25 wt. % Mn - 0.006 wt.% P - 0.005 wt.% S - 0.0030 wt.% N - 0.035 wt.% Al - 0.015 wt.% Nb with the balance of Fe and inevitable impurities. These steel slabs were hot-rolled, cooled with water, and then coiled. The hot-rolled steel sheets thus produced had a thickness falling between 2.5 and 3.4 mm. Next, these hot-rolled steel sheets were washed with acid, then cold-rolled and annealed in a continuous annealing manner. The resulting cold-rolled steel sheets were washed with acid, and temper-rolled. Finally, the cold-rolled steel sheets had a thickness of 1.0 mm (Nos. 7-1 to 7-7). During the continuous annealing, the temperature in the overaging zone in the annealing furnace was not higher than 350°C. In other words, the sheets were not substantially overaged. The rolling conditions, the coiling temperature and the annealing condition are shown in Table 12.

Apart from the above, another steel slab was prepared, which had a composition of 0.035 wt.% C - 0.01 wt.% Si - 0.25 wt. % Mn - 0.006 wt.% P - 0.005 wt.% S - 0.0020 wt.% N - 0.035 wt.% Al - 0.005 wt.% Nb with the balance of Fe and inevitable impurities. This was rolled and processed in the manner mentioned below to produce a comparative steel sheet.

For the comparative steel sheet, the slab was hot-rolled, cooled with water and coiled. The resulting hot-rolled steel sheet (No. 7-8) having a thickness of 2.6 mm was washed with acid, and cold-rolled. The cold-rolled steel sheet had a thickness of 1.0 mm. This was soaked at 700°C for 40 seconds for annealing, then cooled at a cooling speed of 50°C/sec, and thereafter overaged at 400°C for 60 seconds.

These cold-rolled steel sheets were formed into closed-type, 200-liter drums in the same manner as above. In this process, the sheets were checked for their drum-formability. The outer surface of each drum was painted with an epoxy-based paint, and the inner surface thereof was chemically processed. At room temperature (15°C), an external concentrated load was applied to each drum to make it have compression stress in its circumferential direction, whereupon the degree of deformation of each drum was measured. The data obtained are all shown in Table 12.

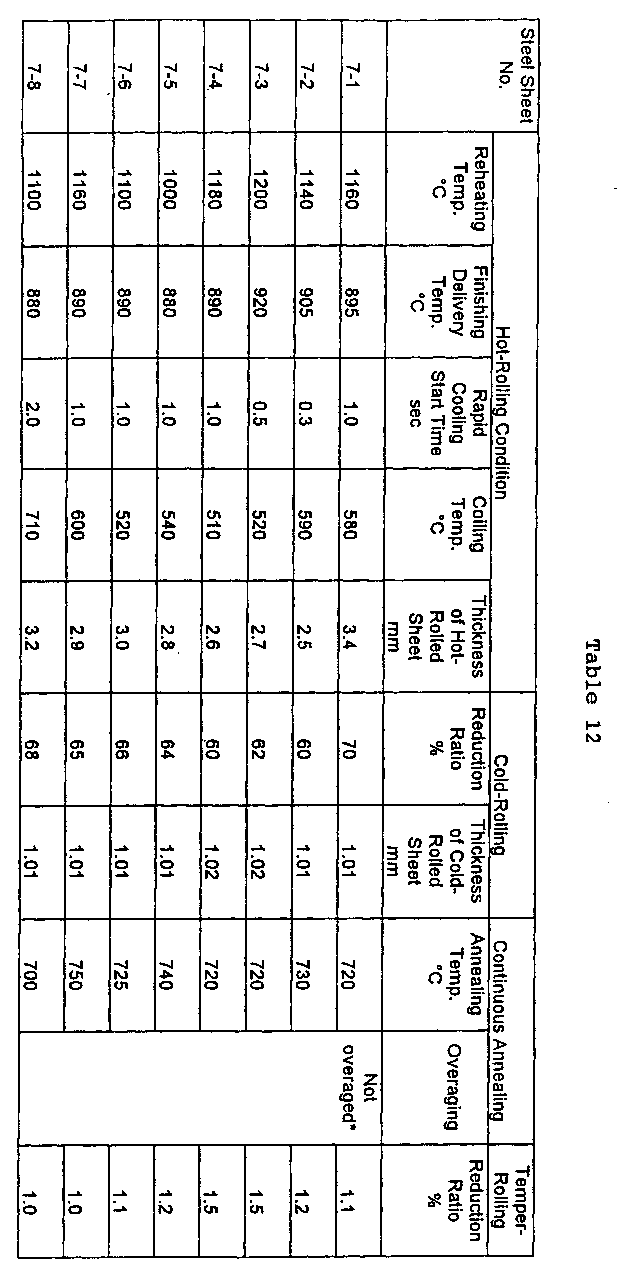

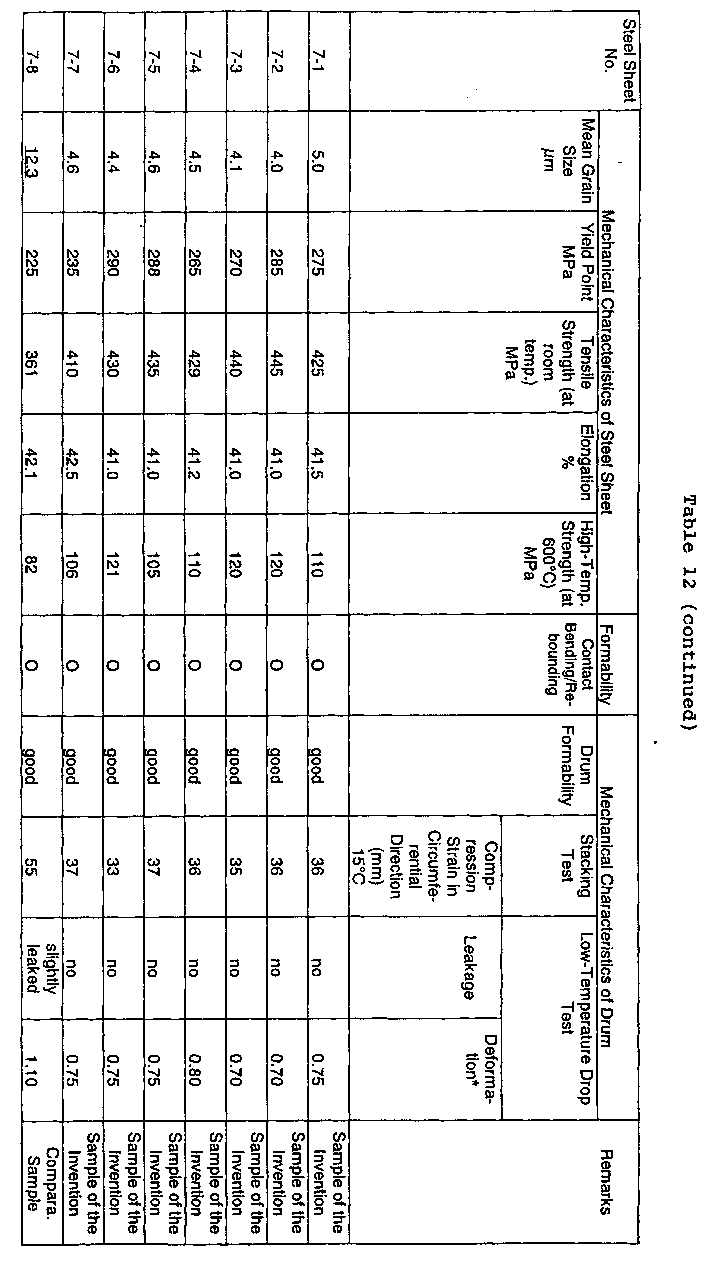

From Table 12, it is known that the degree of deformation of the drums of the steel sheets of the invention (Nos. 7-1 to 7-7) which were loaded is significantly lower than that of the comparative drum (No. 7-8). Thus, the drums of the invention have high mechanical strength. Like in Example 6, the drums were subjected to the "low-temperature drop test", in which the drums of the invention did not leak liquid. In addition, the inner pressure of each drum was increased, and the degree of deformation of the drums was measured. In this test, it was confirmed that the degree of deformation of the drums of the invention was smaller than that of the comparative drum in some degree, though the difference in the deformation degree in this test was not so clear as in the previous test in which the external compression stress load was applied to the drums outside.

### (Example 8)

In the same manner as above, a large number of steel slabs were prepared from steel melts having the chemical composition shown in Table 13. These steel slabs were hot-rolled, cooled with water, or without being cooled, and coiled, The resulting hot-rolled steel sheets had a thickness falling between 2.9 and 3.4 mm. These hot-rolled steel sheets were washed with acid, and then cold-rolled. The resulting cold-rolled steel sheets were annealed in a continuous annealing manner, and then temper-rolled. Finally, the cold-rolled steel sheets had a thickness of 1.0 mm. In the continuous annealing, the sheets were not overaged. The rolling conditions, the coiling temperature, the annealing condition and the temper-rolling condition are shown in Table 14.

The cold-rolled steel sheets were formed into body plates and top boards for drums. The body plates were formed into cylindrical bodies through bending, and the both ends were welded through seaming. In order to optimize the seam-welding condition for the drum bodies, the primary current for welding was varied on the basis of the standard welding condition for conventional low-carbon aluminium-killed steel sheets (thickness: 1.0 mm). Precisely, for the standard welding condition, the primary current for welding is 220 A, the welding speed is 15 m/min, the electrode pressure to be controlled by the cylinder pressure is 530 kgf (this corresponds to the cylinder pressure of 3.0 kgf/cm²). Next, according to an ordinary drum-forming process, the ends of the drum bodies were worked to form flanges or rings therearound through flange-shaping or expand-shaping, whereupon the body plates were checked for cracks or other defects, if any. In that manner, the suitable welding current range was determined. For seam-welding the drum bodies, a welding current falling within the thus-determined suitable range was applied to them. The closed-type drums thus produced herein had a capacity of 200 liters, for which both the top board and the base board were double-seamed. The drums were subjected to a body compression test (in which static compression was applied to each drum in the axial direction), and the static collapse strength of each drum was measured.

The data obtained are all shown in Table 14 along with the mean grain size of the grains in each steel sheet and other mechanical characteristics of the sheets and the drums.

**Table 13**

| (wt.%) | | | | | | | | | |
|---|---|---|---|---|---|---|---|---|---|
| Code | C | Si | Mn | P | S | Al | N | Nb | Remarks |
| U | 0.028 | 0.01 | 0.20 | 0.009 | 0.007 | 0.045 | 0.0025 | 0.010 | Sample of the Invention |
| V | 0.055 | 0.01 | 0.25 | 0.008 | 0.006 | 0.038 | 0.0021 | 0.009 | Sample of the Invention |
| W | 0.045 | 0.01 | 0.18 | 0.005 | 0.005 | 0.055 | 0.0017 | 0.018 | Sample of the Invention |
| X | 0.055 | 0.01 | 1.20 | 0.004 | 0.004 | 0.038 | 0.0025 | 0.015 | Comparative Sample |
| Y | 0.047 | 0.25 | 0.35 | 0.004 | 0.007 | 0.044 | 0.0025 | 0.011 | Comparative Sample |
| Z | 0.035 | 0.01 | 0.18 | 0.011 | 0.007 | 0.045 | 0.0022 | - | Conventional Sample |

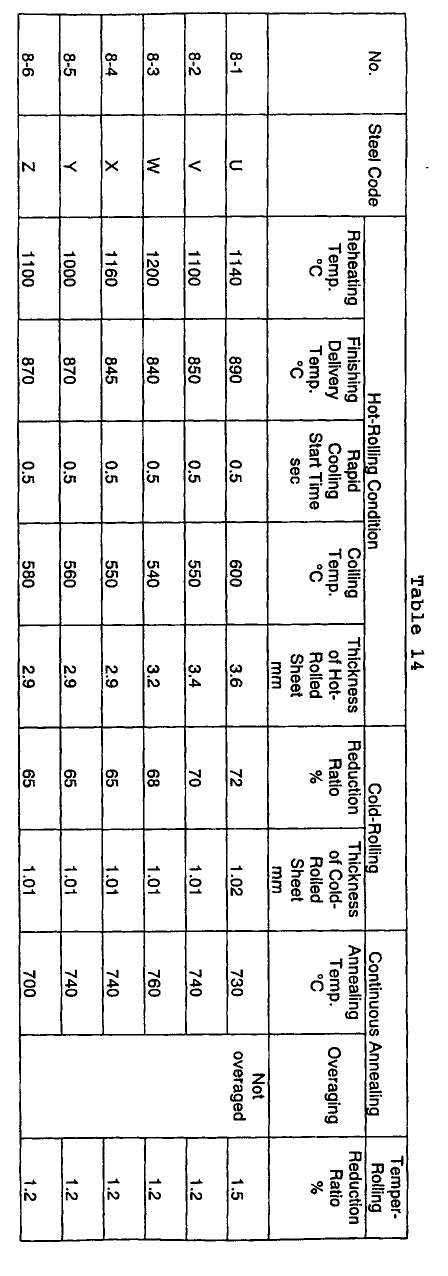

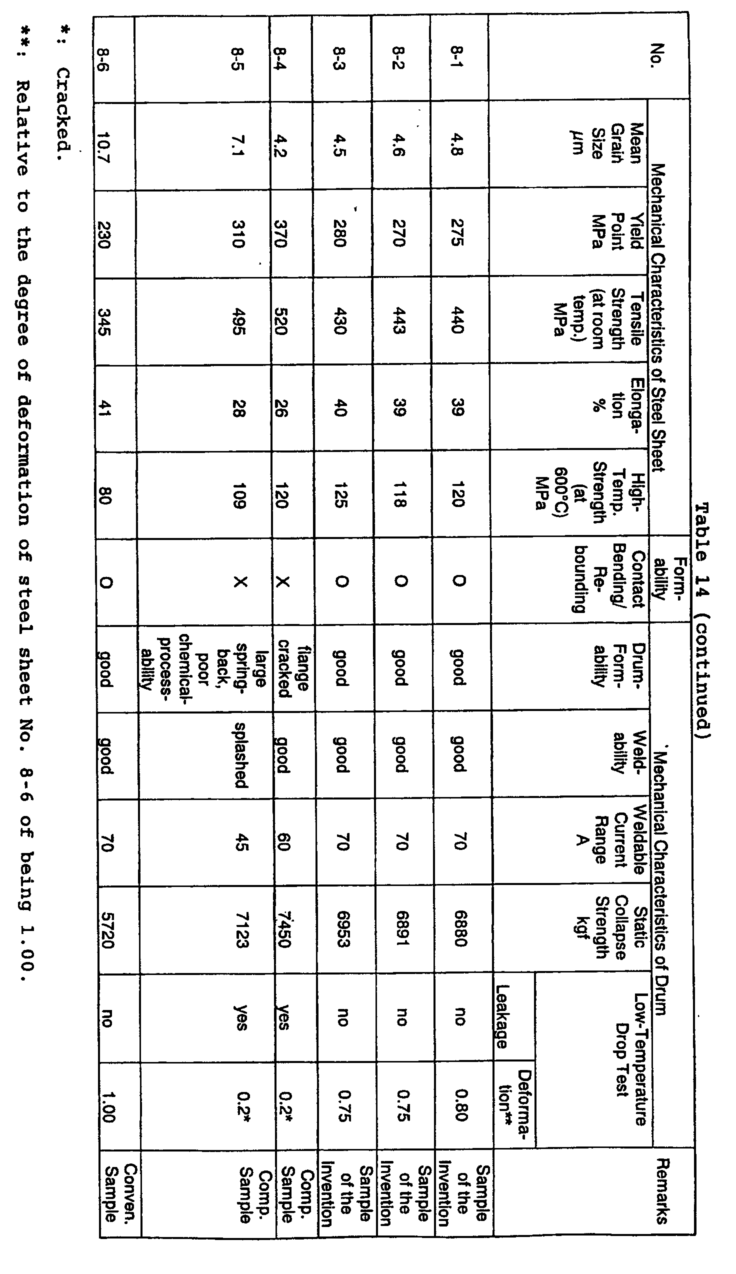

From Table 14, it is known that the steel sheets of the invention (Nos. 8-1 to 8-3) are weldable within the same current range as that within which the conventional steel sheet is weldable, though having higher mechanical strength than the conventional one, and that the drum-formability of the steel sheets of the invention is all good. In addition, it is also known that the static collapse strength of the drums of the steel sheets of the invention is higher than that of the conventional drum. This corresponds to the high mechanical strength of the steel sheets of the invention. Accordingly, it is known that the drums made of the cold-rolled steel sheets of the invention have increased mechanical strength without their weldability decreasing.

### (Example 9)

In the same manner as above, a large number of steel slabs having a thickness of 260 mm were prepared from steel melts having the chemical composition shown in Table 15. These steel slabs were hot-rolled, cooled, and then coiled. The hot-rolled steel sheets had a thickness of 1.22 mm. These were optionally washed with acid and temper-rolled, and finally had a thickness of 1.20 mm. The rolling condition and the coiling condition are shown in Table 16.

The mean grain size of the grains in those hot-rolled steel sheets, and also the tensile characteristics (tensile strength at room temperature (25°C) and at 600°C), the bending characteristics and the repeated bending characteristics of the sheets were measured.

The mean grain size was measured in the same manner as above, on the optical microscopic pictures and the electronic microscopic pictures of the sheets. Also on the same pictures, the thickness of the mill scale formed on each sheet was measured. The methods for measuring the tensile characteristics, the tensile strength at 600°C, the bending characteristics and the repeated bending characteristics were the same as those mentioned above.

The test data are all shown in Table 16, in which the conventional sample is the same as the conventional steel sheet (No. 6-5) in Table 11 in Example 6.

**Table 15**

| (wt.%) | | | | | | | | | | |
|---|---|---|---|---|---|---|---|---|---|---|
| Code | C | Si | Mn | P | S | Al | N | Nb | Ti | Remarks |
| A1 | 0.032 | 0.01 | 0.13 | 0.008 | 0.003 | 0.045 | 0.0023 | 0.008 | <0.001 | Sample of the Invention |
| A2 | 0.027 | 0.01 | 0.20 | 0.006 | 0.002 | 0.047 | 0.0018 | 0.015 | <0.001 | Sample of the Invention |
| A2 | 0.045 | 0.01 | 0.10 | 0.006 | 0.007 | 0.045 | 0.0015 | 0.020 | 0.011 | Sample of the Invention |

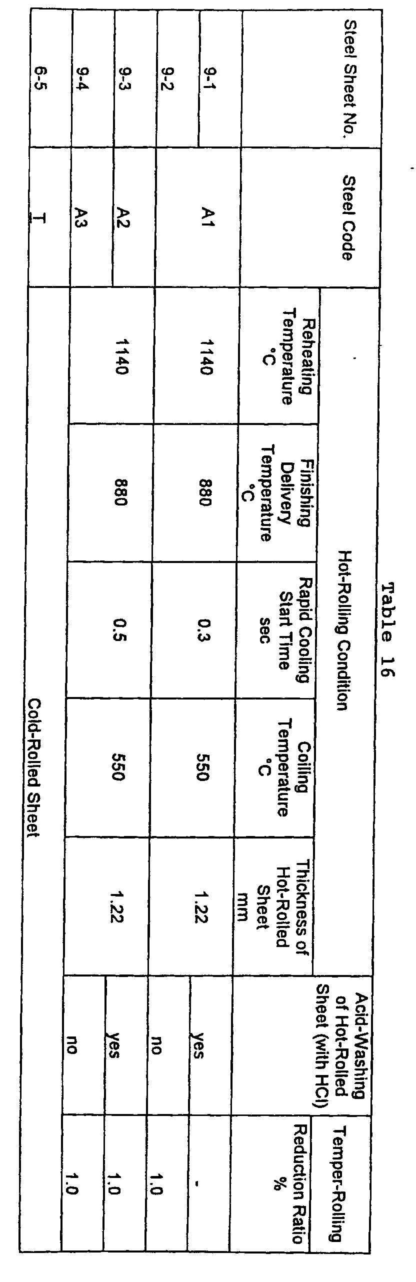

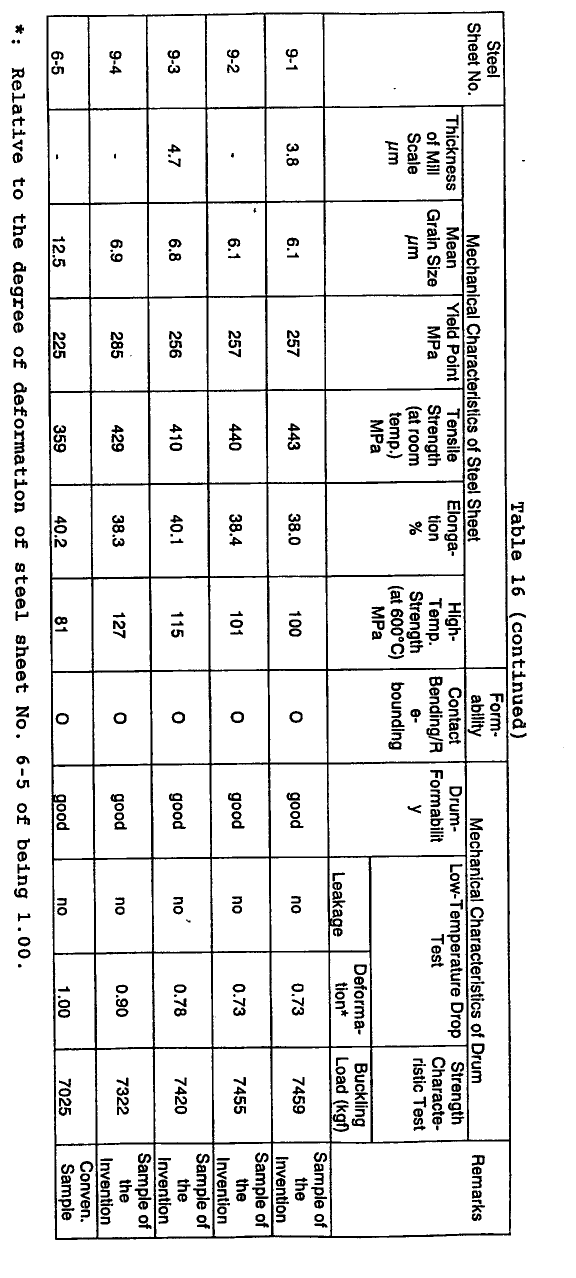

The steel sheets of the invention (Nos. 9-1 to 9-4) have a mean grain size of smaller than 10 µm and have a degree of elongation of 38 % or higher. In addition, their tensile strength at room temperature (25°C) and even high-temperature strength at 600°C both increased without their ductility decreasing, as compared with the conventional steel sheet (No. 6-5). Moreover, the steel sheets of the invention had good bending characteristics.

Next, these steel sheets were formed into closed-type, 200-liter drums in the same manner as above. The drums were painted with an epoxy-based paint on their outer surface, and their inner surface was chemically processed with zinc phosphate. While being formed into the drums, the steel sheets were checked for their bending workability, shape freezability and weldability, on the basis of which the sheets were qualitatively evaluated for their drum-formability. In order to check the drums for their mechanical strength characteristics, the empty drums were compressed in the axial direction and in the circumferential direction. In this test, the load as applied to each empty drum until the drum macroscopically buckled up under compression was measured, and the thus measured load indicates the buckling load to the drum. In addition, the drums were subjected to the "low-temperature drop test".

The test data are all shown in Table 16 in the column of mechanical characteristics of drum.

From Table 16, it is obvious that the steel sheets of the invention all have good drum-formability, and the buckling load to them as tested in the strength characteristic test is higher than that to the conventional steel sheet. In addition, it is also obvious that, in the low-temperature drop test for the drums, the degree of deformation of the drums of the invention was lower than that of the conventional drum. Moreover, it is further obvious that, in the low-temperature drop test, the drums of the invention did not leak liquid, and they ensured safe storage of the contents therein. This indicates that the sheets of the invention all the time ensure reliable seamability. Specifically, the steel sheets of the invention can be well seamed, irrespective of the seaming modes of double-seaming or triple-seaming and even under severe conditions at low temperatures, and the seamed parts of the sheets are all the time reliable.

### (Example 10)

In the same manner as above, a large number of steel slabs were prepared from steel melts having a composition of 0.032 wt.% C - 0.01 wt.% Si - 0.15 wt.% Mn - 0.003 wt.% P - 0.004 wt.% S - 0.045 wt.% Al - 0.017 wt.% Nb - 0.0021 wt.% N with the balance of Fe and inevitable impurities. The steel slabs were hot-rolled, cooled with water, and coiled. The resulting hot-rolled steel sheets were washed with acid and then temper-rolled. Finally, the hot-rolled steel sheets had a thickness of 1.2 mm. The rolling condition and the coiling temperature are shown in Table 17.

Also in the same manner as above, the hot-rolled steel sheets were formed into closed-type, 200-liter drums, while they were checked for their drum-formability. The outer surface of each drum was painted with an epoxy-based paint. At room temperature (15°C), an external concentrated load was applied to each drum to make it have compression stress in its circumferential direction, whereupon the degree of deformation of each drum was measured. The data obtained are all shown in Table 17.

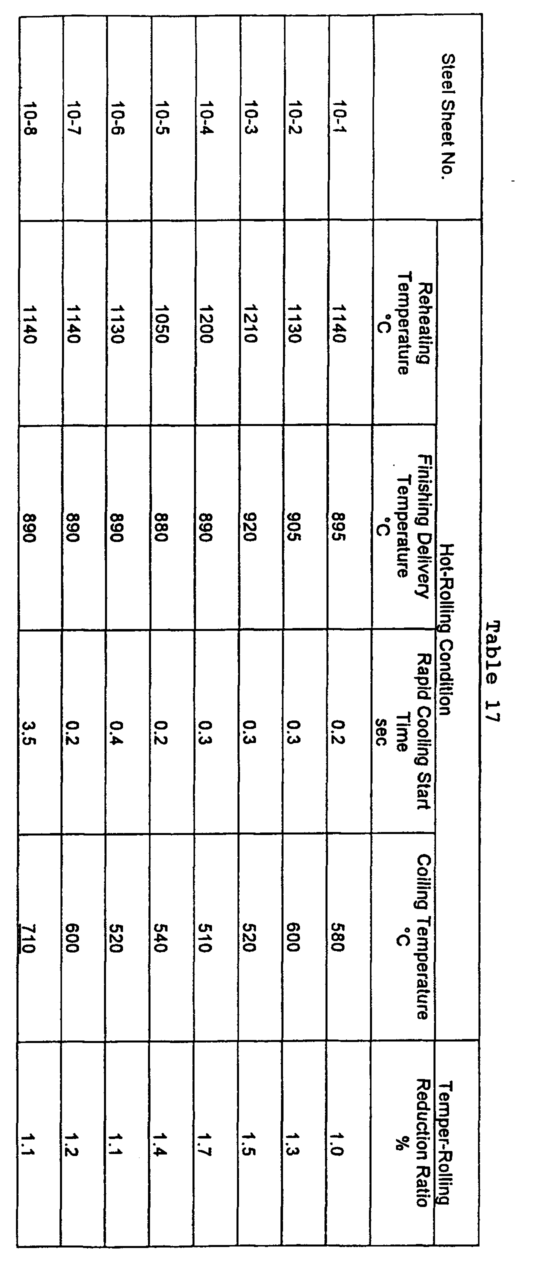

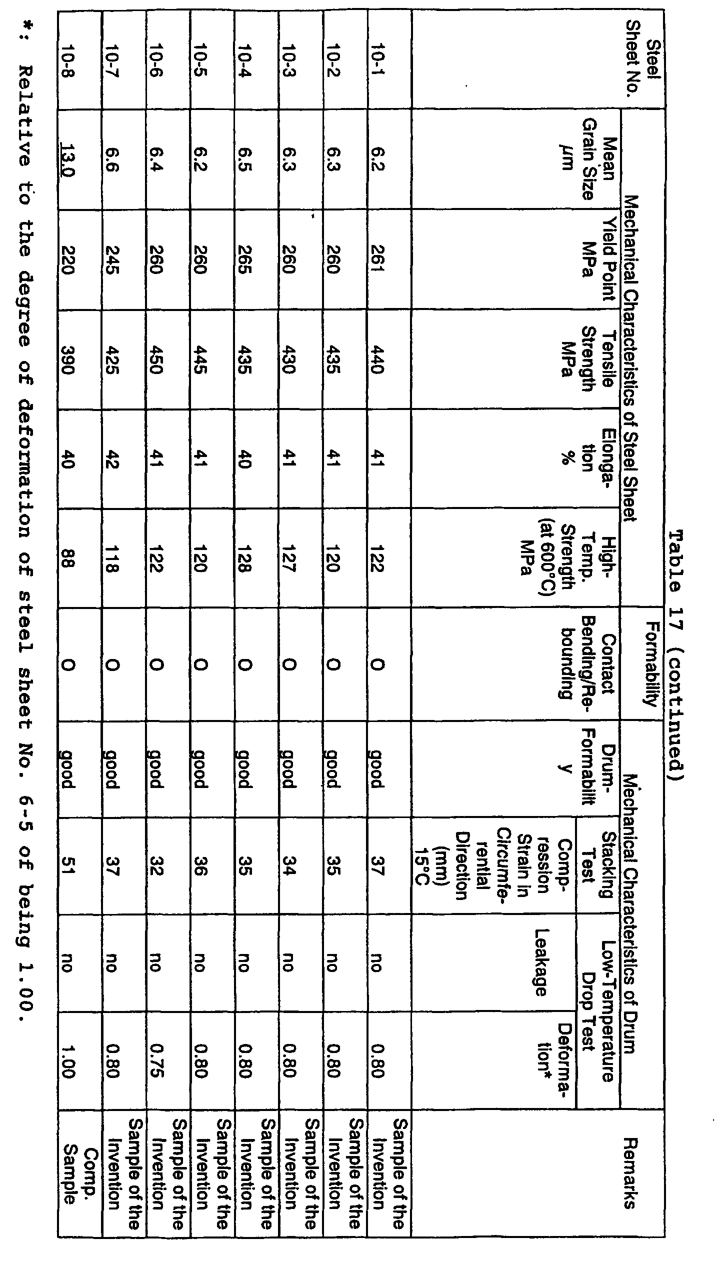

From Table 17, it is known that the degree of deformation of the drums of the steel sheets of the invention (Nos. 10-1 to 10-7) that were loaded at room temperature or a high temperature is extremely low at both temperatures. Contrary to this, the degree of deformation of the drum of the comparative steel sheet (No. 10-8) which was loaded is great. In addition, the inner pressure of each drum was increased, and the degree of deformation of the drums was measured. In this test, it was confirmed that the degree of deformation of the drums of the invention was smaller than that of the comparative drum in some degree, though the difference in the deformation degree in this test was not so clear as in the previous test in which the external compression stress load was applied to the drums outside.

### (Example 11)

In the same manner as above, a large number of steel slabs were prepared from steel melts having the chemical composition shown in Table 18. These steel slabs were hot-rolled, cooled with water, and coiled. The resulting hot-rolled steel sheets were washed with acid, and then optionally temper-rolled. Finally, the hot-rolled steel sheets had a thickness of 1.0 mm and had no mill scale. (These sheets are scale-free ones.)

Apart from the above, a large number of steel slabs were prepared from a steel melt having a composition of 0.035 wt.% C - 0.01 wt.% Si - 0.18 wt.% Mn - 0.006 wt.% P - 0.005 wt.% S - 0.045 wt.% Al - 0.0021 wt.% N with the balance of Fe and inevitable impurities (this is steel A9 in Table 18). These steel slabs were hot-rolled, washed with water, and coiled. The resulting hot-rolled steel sheets were washed with acid, and some of them were temper-rolled. As a result, obtained were cold-rolled steel sheets all having the same thickness of 1.0 mm. A slab of steel A9 was hot-rolled to give a hot-rolled steel sheet having a thickness of 2.9 mm and then cold-rolled to give a cold-rolled steel sheet having a thickness of 1.0 mm. The cold-rolled steel sheet was annealed, and this is a conventional cold-rolled steel sheet (No. 11-6). During the annealing, the sheet was soaked at 690°C for 40 seconds, and then cooled at a cooling speed of 30°C/second. It was not substantially overaged. The rolling conditions, the coiling temperature and the temper-rolling condition for the steel sheets produced herein are all shown in Table 19.

The hot-rolled steel sheets and the cold-rolled steel sheets were formed into body plates and top boards for drums. The body plates were formed into cylindrical bodies through bending, and the both ends were welded through seaming. In order to optimize the seam-welding condition for the drum bodies, the suitable welding current range for the body plates was determined in the same manner as in Example 8. Within the thus-determined current range, formed were closed-type, 200-liter drums. The drums were subjected to a body compression test (in which static compression was applied to each drum in the axial direction), and the static collapse strength of each drum was measured. The data obtained are all shown in Table 19 along with the mean grain size of the grains in each steel sheet and other mechanical characteristics of the sheets and the drums.

**Table 18**

| (wt.%) | | | | | | | | | |
|---|---|---|---|---|---|---|---|---|---|
| Code | C | Si | Mn | P | S | Al | N | Nb | Remarks |
| A4 | 0.038 | 0.01 | 0.20 | 0.001 | 0.007 | 0.045 | 0.002 | 0.011 | Sample of the Invention |
| A5 | 0.057 | 0.01 | 0.27 | 0.002 | 0.004 | 0.039 | 0.002 | 0.009 | Sample of the Invention |
| A6 | 0.048 | 0.01 | 0.18 | 0.001 | 0.005 | 0.055 | 0.002 | 0.018 | Sample of the Invention |
| A7 | 0.052 | 0.01 | 1.15 | 0.003 | 0.004 | 0.038 | 0.002 | 0.015 | Comparative Sample |
| A8 | 0.044 | 0.25 | 0.35 | 0.004 | 0.006 | 0.044 | 0.001 | 0.011 | Comparative Sample |
| A9 | 0.035 | 0.01 | 0.18 | 0.011 | 0.007 | 0.045 | 0.002 | - | Conventional Sample |

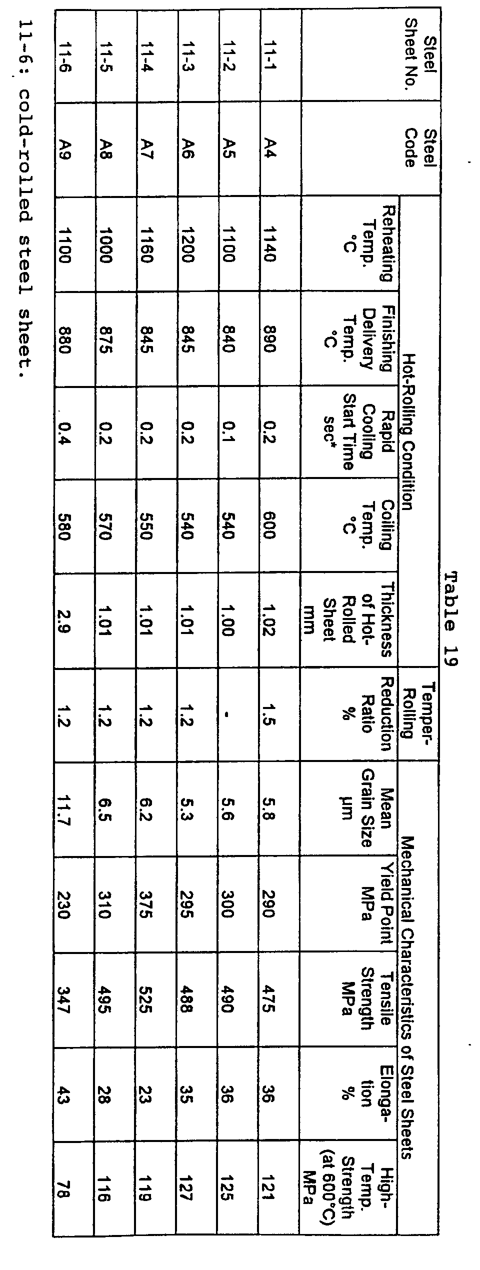

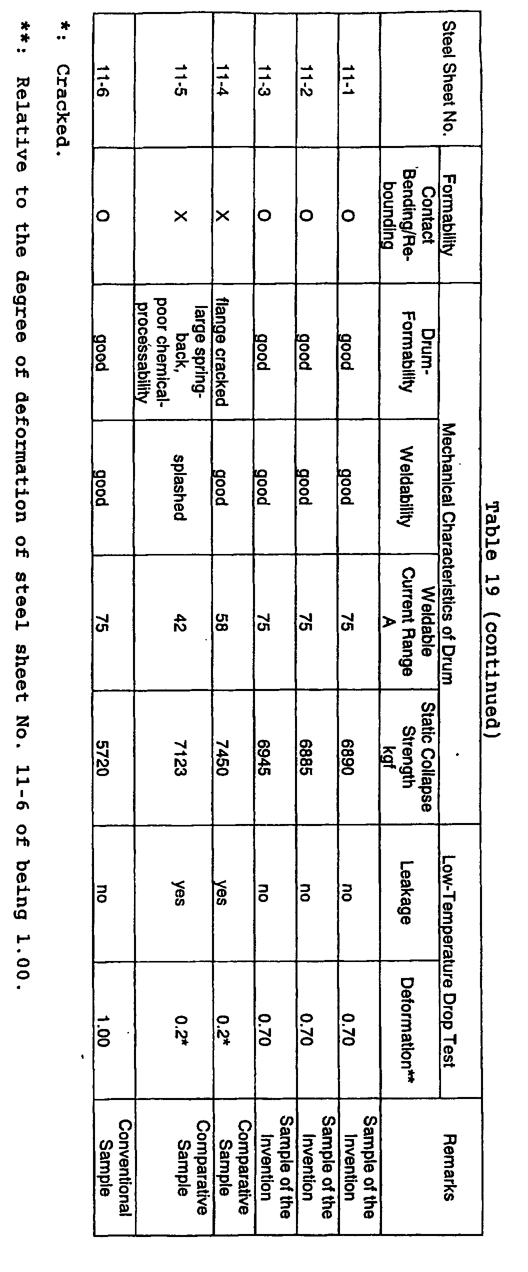

From Table 19, it is known that the weldable current range (the uppermost and lowermost limits may vary) for the steel sheets of the invention is comparable to that for the conventional steel sheet, though the mechanical strength of the sheets of the invention is higher than that of the conventional sheet, and that both the drum-formability and the weldability of the sheets of the invention are good. In addition, the static collapse strength of the drums of the invention is higher than that of the conventional drum, and this corresponds to the mechanical strength of the steel sheets for the drums. Specifically, it is obvious that the drums made of the high-strength, hot-rolled steel sheets of the invention have increased mechanical strength without their weldability decreasing. In particular, it has been confirmed that, even when the seamed part of the drums made of the steel sheets of the invention is forcedly deformed to the same degree as in the seamed part of the drum made of the conventional steel sheet, it satisfactorily ensures air-tightness against larger strain. The results are still the same even in severe conditions at low temperatures.

### (Example 12)

In the same manner as above, a large number of steel slabs were prepared from a steel melt having the chemical composition of A1 shown in Table 15. These steel slabs were hot-rolled and coiled. The resulting hot-rolled steel sheets had a thickness of 1.0 mm. These were not washed with acid, or that is, they had mill scale on their surface (they are mill scale-coated sheets.) The sheets were formed into 200-liter drums in the same manner as above. The body plates were welded through seaming, for which the welding current was lower than that for mill scale-free sheets. Without being chemically processed, the drums were painted directly on the mill scale-coated surface. The rolling condition and the coiling temperature are shown in Table 20.

The drum-formability of the hot-rolled steel sheets produced herein is shown in Table 20 along with the hot-rolling condition for the sheets, the mean grain size of the grains in the sheets, the thickness of the mill scale coat (oxide layer) on the sheets, and the composition of the mill scale (in terms of the magnetite content). The magnetite content of the mill scale was measured through X-ray diffractometry.

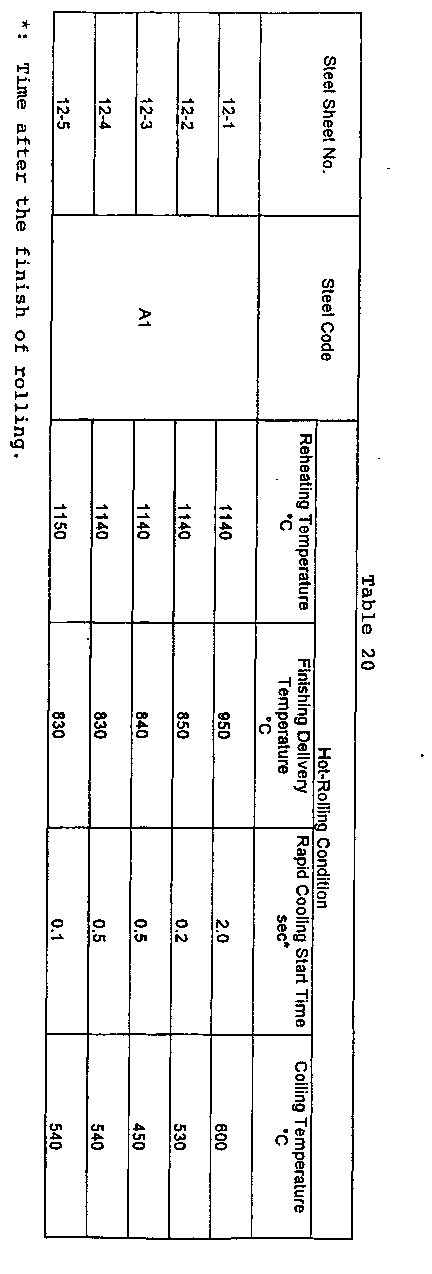

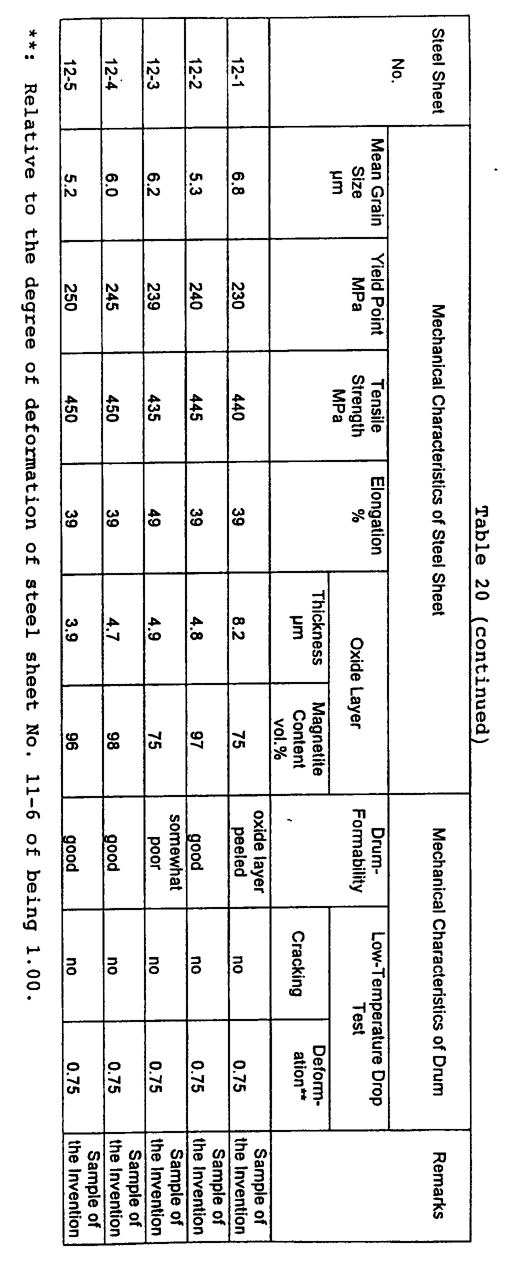

As in Table 20, for the steel sheets of the invention as coated with a thick oxide layer (mill scale) having a small magnetite content, the oxide layer often peeled while the sheets are formed into drums. However, it is obvious that, when the thickness of the oxide layer is reduced to 5 µm or lower, the layer peeling during drum formation is reduced to a negligible degree. On the other hand, when the steel sheets as coated with a relatively thick oxide layer were formed into drum bodies through seam-welding, the electrode abrasion increased in some degree, as compared with steel sheets having no mill scale (oxide layer). However, for the sheets coated with a thinner oxide layer having a thickness of not larger than 5 µm, the electrode abrasion was much reduced, or that is, it was nearly comparable to that for ordinary cold-rolled steel sheets. In order to lower the thickness of the oxide layer to be not larger than 5 µm, it is desirable that the finishing delivery temperature in hot-rolling is at most 920°C or lower, the time after the end of finish rolling and before the start of cooling is at most 0.5 seconds or shorter, and the coiling temperature is at most 600°C or lower.

As in the above, drums can be formed from Nb-containing steel sheets having a degree of elongation of not smaller than 35 % and comprising fine grains having a small mean grain size, according to the second technical idea of the invention. The drum-formability of the sheets is good, and the mechanical strength of the drums at room temperature and even at high temperatures is high. In addition, the frequency of recycling the drums can be increased.

### INDUSTRIAL APPLICABILITY

When the high-strength steel sheets of the invention are formed into drums, the mechanical strength of the drums at room temperature and at high temperatures is enhanced as compared with that of conventional drums, and the drum-formability of the sheets is comparable to or better than that of conventional steel sheets. The thickness of the sheets of the invention for drums can be reduced to be lower than that of conventional drum sheets. Therefore, according to the invention, the production costs for drums are reduced, the body weight of the drums produced can be reduced, and the reliability at the seamed parts of the drums produced is much increased. Thus, the industrial advantages of the invention are significantly great. Moreover, the frequency of recycling the drums of the invention is increased, and the invention significantly contributes to the purpose of recycling natural resources.

## Claims

1. A steel sheet to be used as the material for drums, which is characterized by containing:
C of from 0.01 to 0.10 % by weight,
Si of from 0.01 to 0.20 % by weight,
Mn of from 0.05 to 1.0 % by weight,
P of at most 0.04 % by weight,
S of at most 0.03 % by weight,
Al of from 0.001 to 0.15 % by weight, and
N of from 0.0050 to 0.0200 % by weight,
with the balance of Fe and inevitable impurities.

2. The steel sheet for drums as claimed in claim 1, in which at least 0.0010 % by weight of N is in the form of solute N, and which has a degree of elongation of at least 35 %.

3. The steel sheet for drums as claimed in claim 1 or 2, which is a cold-rolled steel sheet.

4. The steel sheet for drums as claimed in claim 1 or 2, which is a mill scale-coated, hot-rolled steel sheet.

5. A method for producing steel sheets for drums, which comprises hot-rolling a steel slab of a composition that contains:
C of from 0.01 to 0.10 % by weight,
Si of from 0.01 to 0.20 % by weight,
Mn of from 0.05 to 1.0 % by weight,
P of at most 0.04 % by weight,
S of at most 0.03 % by weight,
Al of from 0.001 to 0.15 % by weight, and
N of from 0.0050 to 0.0200 % by weight,
with the balance of Fe and inevitable impurities, at a finishing delivery temperature of not lower than 800°C, then cooling it in an accelerated cooling manner within 2 seconds after the finish of the hot-rolling, and thereafter coiling it at a coiling temperature of not higher than 680°C.

6. The method for producing steel sheets for drums as claimed in claim 5, which further comprises washing the resulting steel sheet with acid.

7. The method for producing steel sheets for drums as claimed in claim 6, wherein the steel sheet having been washed with acid is cold-rolled, and thereafter annealed at a temperature not lower than the recrystallization temperature of the steel sheet.

8. The method for producing steel sheets for drums as claimed in any one of claims 5 to 7, which still further comprises temper-rolling the steel sheet.

9. A steel sheet to be used as the material for drums, which is characterized by containing:
C of from 0.01 to 0.10 % by weight,
Si of from 0.01 to 0.20 % by weight,
Mn of from 0.05 to 1.0 % by weight,
P of at most 0.04 % by weight,
S of at most 0.01 % by weight,
Al of from 0.001 to 0.15 % by weight,
N of at most 0.0050 % by weight, and
Nb of from 0.003 to 0.10 % by weight,
with the balance of Fe and inevitable impurities.

10. The steel sheet for drums as claimed in claim 9, which additionally contains Ti of from 0.005 to 0.10 % by weight.

11. The steel sheet for drums as claimed in claim 9 or 10, wherein the grains in the ferrite phase appearing in the steel sheet have a mean grain size of not larger than 10 µm.

12. The steel sheet for drums as claimed in any one of claims 9 to 11, which is a mill scale-coated, hot-rolled steel sheet.

13. The steel sheet for drums as claimed in claim 12, wherein the mill scale is a film having a magnetite content of at least 80 % by volume.

14. The steel sheet for drums as claimed in claim 12 or 13, wherein the mill scale has a thickness of not larger than 5 µm.

15. The steel sheet for drums as claimed in any one of claims 9 to 11, which is a cold-rolled steel sheet.

16. A method for producing steel sheets for drums, which comprises hot-rolling a steel slab of a composition that contains:
C of from 0.01 to 0.10 % by weight,
Si of from 0.01 to 0.20 % by weight,
Mn of from 0.05 to 1.0 % by weight,
P of at most 0.04 % by weight,
S of at most 0.01 % by weight,
Al of from 0.001 to 0.150 % by weight,
N of at most 0.0050 % by weight, and
Nb of from 0.003 to 0.10 % by weight,
with the balance of Fe and inevitable impurities, at a finishing delivery temperature of not lower than 750°C, then cooling it in an accelerated cooling manner within 2 seconds after the finish of the hot-rolling, and thereafter coiling it at a coiling temperature of not higher than 700°C.

17. The method for producing steel sheets for drums as claimed in claim 16, which further comprises washing the resulting steel sheet with acid.

18. The method for producing steel sheets for drums as claimed in claim 16, wherein the steel sheet having been washed with acid is cold-rolled, and thereafter annealed at a temperature not lower than the recrystallization temperature of the steel sheet.

19. The method for producing steel sheets for drums as claimed in any one of claims 16 to 18, which still further comprises temper-rolling the steel sheet.

20. A drum composed of a cylindrical body plate, and a top board to be a lid and a base board to be a bottom that are fitted to the ends of the body plate and are in the form of a disc;
the drum being characterized in that one or more of the body plate, the top board and the base board are made of any of the steel sheets for drums of claims 1 to 3 and claims 8 to 14.
